# EUROPÄISCHE PATENTSCHRIFT

(11) **EP 2 879 509 B1**
(45) Veröffentlichungstag und Bekanntmachung des Hinweises auf die Patenterteilung: **22.11.2023**
(21) Anmeldenummer: 13748264.2
(22) Anmeldetag: 02.08.2013
(51) Int. Cl.: A23G 3/54, A21D 13/00

(54) **DAUERBACKWARE SOWIE VERFAHREN ZU DEREN HERSTELLUNG**
LONG-LIFE BAKERY PRODUCT AND METHOD FOR THE PRODUCTION THEREOF
ARTICLE DE BISCUITERIE ET SON PROCÉDÉ DE FABRICATION

(30) Priorität: 03.08.2012 DE 102012015455
(43) Veröffentlichungstag der Anmeldung: 10.06.2015
(73) Patentinhaber: Bahlsen GmbH & Co. KG, 30163 Hannover (DE)
(72) Erfinder: BRETSCHNEIDER, Uwe, 30659 Hannover (DE); WURST, Thomas, 31319 Sehnde OT Höver (DE); SCHIMMELPFENNIG-WIECHELL, Stefan, 30974 Wennigsen (DE); RAHN, Oliver, 30926 Seelze-Döteberg (DE); PURSCHKE, Arno, 30890 Barsinghausen (DE); HOFFMANN, Frank, 30974 Wennigsen (DE); RABI, Werner, 30952 Ronnenberg (DE)
(74) Vertreter: Bohmann, Armin K.
(86) Internationale Anmeldenummer: PCT/EP2013/002313
(87) Internationale Veröffentlichungsnummer: WO 2014/019704

(56) Entgegenhaltungen:
- EP-A2- 0 317 917
- DE-A1- 3 331 445
- DE-C1- 19 741 717
- GB-A- 2 120 516
- US-A- 4 812 318
- US-A- 5 612 078
- US-A1- 2004 228 957

## Beschreibung

Die Erfindung bezieht sich auf eine Dauerbackware sowie auf ein Verfahren zu deren Herstellung. Im Einzelnen bezieht sich die Erfindung auf eine sandwichartige Dauerbackware mit einem oberen flachen, plattenartigen Backprodukt und einem unteren, flachen plattenartigen Backprodukt. Zwischen den beiden Backprodukten, welche bevorzugterweise in Form von Keksen, Kräckern oder Waffeln ausgebildet sind, ist eine flache Zwischenschicht angeordnet, welche aus einer Schokolade oder einer vergleichbaren, fetthaltigen Füllung besteht.

Keks-Sandwichprodukte werden heute in unterschiedlichster Form und Vielfalt hergestellt und angeboten. Bekannt sind einerseits die klassischen mit einer aufgeschäumten, fetthaltigen, bei Normaltemperatur eher weich-cremigen Füllung. Dieser Aufbau ist typisch für die derzeitig in Mitteleuropa überwiegend angebotenen Sandwichprodukte aus überwiegend runden Keksen (Dauerbackwaren) und belüfteten fetthaltigen Füllungen, die durch Dichten von 0,6 bis 1 g/cm³ gekennzeichnet sind. Die Herstellung der Schaumstruktur erfolgt als eigenständiger Verfahrensschritt, bei dem Luft oder spezielle Gase (z.B. Stickstoff) oder Gasgemische (Stickstoff und Kohlendioxid u.a.) eingebracht und über Scherung feindispers verteilt wird. Die geschmackliche Vielfalt dieser belüfteten fetthaltigen Füllungen geht dabei von Kakao- über Nuss- bis hin zu Milchfüllungen und Füllungen mit Fruchtgeschmack.
- Andere gefüllte Feingebäcke (Mürbeteiggebäcke, Baisergebäcke, Biskuitmassengebäcke etc.) sind aus den Bereichen der feinen Konditorei, der Patisserie und der industriellen Feingebäckherstellung bekannt. Einerseits werden Marmeladen und Konfitüren als Füllschicht zum Verbinden von zwei Gebäckstücken benutzt. Weiterhin kommen hier ebenfalls fetthaltige, cremigweiche, belüftete Füllungen, wie zum Beispiel Canache, Eierkrem, Schokoladenkrem, Kakaokrem, Schaummassen usw. zum Einsatz. Eine dritte Möglichkeit besteht in dem Auftragen von dünnen Schichten fließfähiger Süßwarenmassen (z.B. Nougat, Fettglasuren oder Schokoladen). Diese Süßwarenmassen verfestigen während der nach dem Auftragen anschließenden Kühlung der Produkte, durch die Kristallisation eines Teiles der enthaltenen Fette. Typisch für diese Produkte ist, dass die Zwischenschicht sehr dünn ist. Typische Dicken liegen im Bereich 0,5 bis 1,5 mm. Diese Zwischenschichten sind durch eine geringe Schichtdicke und eine eher weiche Konsistenz gekennzeichnet, die in der Regel durch die Migration von flüssigen Fettkomponenten aus dem Gebäck in die Schokolade bzw. Zwischenschicht und damit das Erweichen des Fettsystems verursacht wird.

Eine Alternative zu diesen Produkten stellt das in der Schrift DE 197 41 718 C1 beschriebene Produkt dar. Hier wird zwischen zwei plattenförmigen Gebäcken eine dritte plattenförmige Komponente (z.B. ein speziell geformter Schokoladenkörper) durch eine Fügemasse, die jeweils zwischen dem Gebäck und dem plattenförmigen Schokoladenkörper eingebracht wurde, fest verbunden. Das Produkt zeichnet sich dadurch aus, dass die Seitenflächen der plattenförmigen Füllung im Wesentlichen mit den Seitenbereichen der Gebäckteile fluchten.

In der DE 197 41 717 C1 wird das Verfahren zur Herstellung, durch die Verbindung dreier, praktisch fester plattenförmiger Körper mittels Fügemasse, beschrieben.

US 5,612,078 A betrifft eine im Wesentlichen wasserfreie Füllcreme für sandwichartige Kekse mit verringertem Fettgehalt.

US 2004/228957 A1 betrifft eine Creme mit einem erhöhten Proteingehalt und einem verringerten Kohlenhydratgehalt.

GB 2 120 516 A betrifft ein Verfahren zur Herstellung von sandwichartigen Keksen mit einer Füllung, wobei das Verfahren keine Zugabe einer hydrophilen Lebensmittelzutat vorsieht.

US 4,812,318 A betrifft Waffelprodukte mit einem Schokoladenüberzug und ein Verfahren zu deren Herstellung. Bei dem Verfahren ist vorgesehen, dass ein flüssiges Polyol zu einer fließfähigen Schokoladenmischung nach deren Temperieren hinzugegeben wird, um die Viskosität der Schokoladenmischung zu erhöhen.

EP 0 317 917 A2 betrifft ein Verfahren zur Herstellung von zuckerfreien, diätetischen und/oder zahnschonenden Schokoladen unter vorangehender gesonderter Gewinnung eines zuckerfreien Crumbs und dessen Weiterverarbeitung von sonst üblichen Schokoladenbestandteilen.

DE 33 31 445 A1 betrifft ein Verfahren zur Herstellung von Milchschokolade mit geringer Keimzahl, charakteristischem Geschmack und reduzierter Conchierdauer.

Der Erfindung liegt die Aufgabe zugrunde, eine Dauerbackware sowie ein Verfahren zu deren Herstellung zu schaffen, welche bei einfachem Aufbau und einfacher Ausgestaltung die Nachteile des Standes der Technik vermeiden und ein industriell fertigbares Produkt schaffen soll, welches optisch ansprechend ist und beim Verzehr einen hohen Genuss vermittelt.

Die der vorliegenden Erfindung zu Grunde liegende Aufgabe wird erfindungsgemäß durch den Gegenstand der beigefügten unabhängigen Ansprüche gelöst. Bevorzugte Ausführungsformen ergeben sich aus den beigefügten abhängigen Ansprüchen.

Genauer wird die der vorliegenden Erfindung zu Grunde liegende Aufgabe in einem ersten Aspekt gelöst durch eine Dauerbackware mit einem oberen flachen plattenartigen Backprodukt (1), mit einem unteren flachen plattenartigen Backprodukt (2) sowie mit zumindest einer flachen Zwischenschicht (3), welche aus einer Schokoladenmasse gefertigt ist, dadurch gekennzeichnet, dass die Zwischenschicht (3) eine hydrophile Lebensmittelzutat aufweist, wobei die hydrophile Lebensmittelzutat Propylenglycol ist oder enthält oder die hydrophile Lebensmittelzutat eine Mischung aus Wasser und Propylenglycol ist oder enthält, wobei der Gehalt an hydrophiler Lebensmittelzutat minimal 0,01 Massen-% und maximal 0,3 Massen-% beträgt.

In einer Ausführungsform des ersten Aspektes ist vorgesehen, dass der Gehalt an hydrophiler Lebensmittelzutat 0,1 Massen-% bis 0,3 Massen-% beträgt.

In einer Ausführungsform des ersten Aspektes ist vorgesehen, dass die Dicke der Zwischenschicht 2,5 mm bis 15 mm beträgt.

Genauer wird die der vorliegenden Erfindung zu Grunde liegende Aufgabe in einem zweiten Aspekt gelöst durch ein Verfahren zur Herstellung einer sandwichartigen Dauerbackware mit einem oberen flachen, plattenartigen Backprodukt (1), mit einem unteren flachen, plattenartigen Backprodukt (2), sowie mit zumindest einer flachen Zwischenschicht (3), insbesondere gemäß dem ersten Aspekt der vorliegenden Erfindung, einschließlich aller Ausführungsformen davon, mit folgenden Arbeitsschritten:
- Bereitstellen des unteren Backprodukts (2),
- Aufbringen einer halbfesten, pastösen, formstabilen, nicht belüfteten Zwischenschicht (3) mit einer über der aus dem Eigengewicht des Produktes ermittelten kritischen Schubspannung liegenden Fließgrenze, wobei die Zwischenschicht (3) aus einer Schokoladenmasse gefertigt ist und wobei die Zwischenschicht (3) eine hydrophile Lebensmittelzutat aufweist, wobei die hydrophile Lebensmittelzutat Propylenglycol ist oder enthält oder die hydrophile Lebensmittelzutat eine Mischung aus Wasser und Propylenglycol ist oder enthält, wobei der Gehalt an hydrophiler Lebensmittelzutat minimal 0,01 Massen-% und maximal 0,3 Massen-% beträgt, und
- Aufbringen des oberen Backprodukts (1).

In einer Ausführungsform des zweiten Aspektes ist vorgesehen, dass die Zwischenschicht (3) durch Temperieren der Schokoladenmasse und Einbringen der hydrophilen Lebensmittelzutat vorbereitet wird.

In einer Ausführungsform des zweiten Aspektes ist vorgesehen, dass das Einbringen der hydrophilen Lebensmittelzutat so erfolgt, dass diese feindispers verteilt wird.

In einer bevorzugten Ausführungsform des zweiten Aspektes ist vorgesehen, dass das feindispers Verteilen der hydrophilen Lebensmittelzutat zusätzlich im Vakuum und/oder ohne Anwesenheit von Gasen durchgeführt wird.

In einer Ausführungsform des zweiten Aspektes ist vorgesehen, dass die Zwischenschicht (3) durch eine formgebende Düse (5) auf das untere Backprodukt (2) aufgebracht wird.

In einer bevorzugten Ausführungsform des zweiten Aspektes ist vorgesehen, dass die Zwischenschicht (3) vertikal zugeführt und mittels der Düse (5) auf das untere Backprodukt (2) aufgebracht wird.

In einer Ausführungsform des zweiten Aspektes ist vorgesehen, dass mittels der Düse (5) eine formgenaue Ausbringung eines Strangs des Materials auf das Zwischenprodukt (3) erfolgt.

In einer Ausführungsform des zweiten Aspektes ist vorgesehen, dass mehrere Zwischenschichten (3) in horizontaler gegenseitiger Lage oder nebeneinander oder strukturiert ineinander aufgebracht werden.

In einer Ausführungsform des zweiten Aspektes ist vorgesehen, dass die Portionierung und Vorformung der Schokoladenmasse in den Kavitäten einer umlaufenden Trommel erfolgt.

In einer bevorzugten Ausführungsform des zweiten Aspektes ist vorgesehen, dass sich die Schokoladenmasse durch das Eigengewicht aus der Kavität auf das zugeführte Gebäckstück herauslöst.

In einer besonders bevorzugten Ausführungsform des zweiten Aspektes ist vorgesehen, dass die Trommel beheizt wird.

In einer alternativen Ausführungsform des zweiten Aspektes ist vorgesehen, dass die Schokoladenmasse durch einen Stempel aus der Kavität auf das zugeführte Gebäckstück aufgebracht wird.

In einer bevorzugten Ausführungsform des zweiten Aspektes ist vorgesehen, dass die Schokoladenmasse vom Stempel durch einen (beheizten) Draht, Messer oder Abstreifer getrennt wird.

In einer Ausführungsform des zweiten Aspektes ist vorgesehen, dass das obere Backprodukt (1) nach dem Aufbringen der Zwischenschicht angedrückt wird.

In einer Ausführungsform des zweiten Aspektes ist vorgesehen, dass die Backprodukte zeitgleich mit der vorgeformten Schokoladenmasse durch seitliches oder vertikales Andrücken verbunden werden.

In einer bevorzugten Ausführungsform des zweiten Aspektes ist vorgesehen, dass die Portionierung durch das Trennen des Füllungsstranges vor dem Verbinden der Schokoladenmasse mit den Gebäckstücken erfolgt.

In einer alternativen bevorzugten Ausführungsform des zweiten Aspektes ist vorgesehen, dass die Portionierung durch das Trennen des Füllungsstranges nach dem Verbinden der Schokoladenmasse mit den Gebäckstücken erfolgt.

Die in den Ansprüchen definierte Erfindung schafft somit ein mehrschichtiges Sandwichprodukt aus zwei Gebäckstücken und einer deutlich sichtbaren Schicht aus Schokolade oder einer vergleichbaren Füllung. Die Füllmasse ist deutlich sichtbar. Dazu ist der Abstand der beiden Gebäckstücke im Bereich von 2 bis 15 mm variierbar und die Füllmasse füllt den zwischenliegenden Raum gleichmäßig und formgenau aus. Die Seitenkanten der Füllmasse schließen möglichst mit den Seitenkanten der Gebäckstücke ab bzw. sind planparallel zu den Seitenkanten der Gebäckstücke nach innen oder außen versetzt. Die mittlere Schicht aus Schokolade entspricht den für eine Schokoladentafel gleicher Dicke typischen sensorischen Erwartungen.

Die Begriffe "Schokolade", "Schokoladenmasse" und "Füllung" werden erfindungsgemäß als Oberbegriffe für jede Art von Schokolade im weitesten Sinne als auch für andere fetthaltige, im Wesentlichen wasserfreie Süßwarenmassen, wie zum Beispiel Nougatmassen, Trüffelmassen, Schokoladenfüllmassen, Kakaokrem-, Milchkrem- und analoge Füllmassen verwendet. Schokoladen und fetthaltige Füllmassen werden während der Verarbeitung aus einem flüssigen Ansatz, der in der Regel eine Temperatur von 40 bis 60°C hat, auf eine für die Weiterverarbeitung günstige Temperatur abgekühlt (in der Regel zwischen 25 bis 33°C) abgekühlt. Im Falle polymorpher Fettsysteme, wie bei der Kakaobutter in der Schokolade, erfolgt vor der Verarbeitung die Herstellung einer Schmelze mit einem definierten Anteil an Impfkristallen durch geeignete Temperier- oder Impfverfahren entsprechend dem Stand der Technik.

Die Begriffe "hydrophile Lebensmittelzutat" bzw. "hydrophiler Bestandteil" werden als Oberbegriffe für eine ganze Reihe von Stoffsystemen, die Schokoladen und Süßwaren zugesetzt werden dürfen, verwendet, die alle eine sehr gute Mischbarkeit mit Wasser jedoch keine bzw. nur eine eingeschränkte Mischbarkeit mit den in Schokolade oder Füllmassen vorhandenen Fetten aufweisen. Eine hydrophile Lebensmittelzutat im Sinne der Erfindung enthält dabei mindestens einen ein- oder mehrwertigen Alkohol oder mindestens einen Zuckeralkohol (die erfindungsgemäßen ein- oder mehrwertigen Alkohole oder Zuckeralkohole werden im Folgenden unter dem Begriff "erfindungsgemäßer Alkohol" zusammengefasst). Der oder die erfindungsgemäßen Alkohole können als Gemisch mehrerer erfindungsgemäßer Alkohole oder als Gemisch mit Wasser, aber auch in Form von wässrigen Lösungen und/oder mit weiteren wasserlöslichen Lebensmitteln und/oder Lebensmittelzusatzstoffen als auch Suspensionen aus Wasser und nicht oder teilweise löslichen Lebensmitteln vorliegen. Eingeschlossen sind auch alle Arten von Lösungen und Suspensionen mit ein-und mehrwertigen Alkoholen (z.B. Aromen mit Propylenglycol als Trägerstoff; Glycerin) sowie mit Zuckeralkoholen (wie z.B. Sorbit, Xylit, Mannit, Isomalt, Malbit, Lactit, Erythryt,...). Die hier angegebenen Massenprozente an hydrophilem Lebensmittelzusatz berücksichtigen nicht die normalerweise in Schokoladen bzw. Füllmassen enthaltenen Mengen an Wasser (in der Regel <0,5 bzw. <1 %).

Vorteilhaft ist vorgesehen, dass die aus der Schokoladenmasse gefertigte Zwischenschicht einen Gehalt von 0,01 bis 0,3 Massen-% einer feindispers verteilten hydrophilen Lebensmittelzutat, also einer hydrophilen Lebensmittelzutat, die während des Verarbeitungsprozesses eingebracht wird, aufweist, wobei die hydrophile Lebensmittelzutat Propylenglycol ist oder enthält oder die hydrophile Lebensmittelzutat eine Mischung aus Wasser und Propylenglycol ist oder enthält,. Mit dieser Zugabe eines definierten Gehaltes an hydrophiler Lebensmittelzutat ergibt sich, wie nachfolgend im Einzelnen noch erläutert wird, eine sofortige Erhöhung der Viskosität und der Fließgrenze. Die Schokoladenmasse wird mit dieser Behandlung sofort in einen halbfesten, plastisch formbaren Zustand überführt. Durch die hohe Viskosität und die hohe Fließgrenze ist es möglich, relativ dicke Schichten als Zwischenschicht aufzutragen. Dies wäre bei den aus dem Stand der Technik bekannten Schokoladenmassen nicht möglich, da diese niedrige Viskosität und Fließgrenzen aufweisen und bei einer Aufbringung in einer dicken Schicht bereits durch ihr Eigengewicht fließen würden. Die Verwendung der erfindungsgemäßen hydrophilen Lebensmittelzutat birgt gegenüber der Verwendung von Wasser ferner den Vorteil, dass eine homogene Einarbeitung aufgrund der besseren Verteilbarkeit und Dispergierfähigkeit in Schokoladenmassen einfacher möglich ist, wobei eine Erhöhung der Fließgrenze bereits mit geringen Mengen an hydrophiler Lebensmittelzutat erzielt werden kann. Zudem hat die Verwendung von mindestens einem ein- oder mehrwertigen Alkohol oder mindestens einem Zuckeralkohol gegenüber der Verwendung von reinem Wasser noch den weiteren mikrobiologischen Vorteil, dass eine mögliche Vermehrung von Mikroorganismen verhindert wird.

Es versteht sich, dass sich im Rahmen der Erfindung der Begriff "Viskosität" auf die Zähigkeit und Fließfähigkeit der Schokoladenmasse bezieht. Es handelt sich dabei um eine scheinbare Viskosität, da die Schokoladenmasse kein Newton'sches Medium ist.

Durch die erfindungsgemäß vorgesehene Lösung ist es bei der Herstellung einer Dauerbackware besonders vorteilhaft möglich, Dicken der Zwischenschicht zwischen 2,5 mm und 15 mm zu realisieren. Dabei ist insbesondere erfindungsgemäß die Textur der Schokoladenmasse im fertiggestellten Zustand der Dauerbackware fest, so dass sich beim Verzehr ein deutlicher Bisswiderstand oder "Knack" sowie Schmelz ergibt, so wie dies der Verbraucher beim Verzehr von Schokoladentafeln kennt.

Die erfindungsgemäße Lösung beinhaltet somit das Ausformen einer Füllschicht in Form einer hochviskosen, pastenartigen Schokolade bzw. analogen fetthaltigen Füllmasse, das gleichzeitige oder zeitlich versetzte, präzise Positionieren der Füllmasse zwischen zwei, in der Regel plattenförmige, Gebäckstücke. Dabei wird in der Regel die Füllmasse noch etwas verformt und ein möglichst guter Kontakt zwischen den sich berührenden Oberflächen der noch nicht vollständig auskristallisierten Schokolade (Füllschicht) und dem Gebäck hergestellt. Danach erfolgen unter weiterer Abkühlung des Produktes das Auskristallisieren der Schokoladenschicht und die feste Verbindung der drei Schichten.

Die genaue Temperaturführung im Kühlprozess und die Beachtung der relativen Luftfeuchtigkeit im Kühler sind relevant für die Qualität des Endproduktes.

Die in den Ansprüchen definierte Erfindung beschreibt ein Verfahren zur Aufbereitung der Schokolade derart, dass diese zum Zeitpunkt des Verbindens mit dem Gebäckstück so hochviskos (pastenartig) ist, dass die nach Durchströmen eines Querschnittes z.B. einer Düse ausgebildete Form der Füllmasse sich möglichst wenig ändert. Das bedeutet, dass die Fließgrenze einer derartigen Füllmasse über der Mindestfließgrenze liegt. Die Mindestfließgrenze entspricht der kritischen Schubspannung. Sie ist die Spannung, die die Füllmasse aufnehmen kann, ohne in den Zustand des Gleitens der Schichten und damit des Fließens überzugehen. Wird die kritische Schubspannung durch extern auf den Körper einwirkende, anisotrope Kräfte oder durch das Eigengewicht des Körpers auf seine einzelnen Schichten wirkenden Kräfte überschritten, so kommt es zum Gleiten bzw. Fließen und damit zur plastischen Verformung.

Erfindungsgemäß ist vorgesehen, dass als Füllung eine Schokolade oder vergleichbare fetthaltige Füllung vor dem Portionieren so vorbehandelt wird, dass vorzugsweise 0,01 bis 0,3 Massen-% hydrophile Lebensmittelzutat in eine vorkristallisierte Schokolade bzw. vortemperierte Füllmasse eingebracht und feindispers verteilt wird und dadurch die Schokolade / Füllmasse in einen halbfesten, pastösen Zustand vor dem Portionieren zwischen zwei Keksen überführt wird. Das Erzeugen von feindispers verteilten Tropfen aus hydrophiler Lebensmittelzutat kann durch Mischen bzw. intensives Rühren im offenen Rührgefäß erfolgen. Hier besteht jedoch die Gefahr, dass anteilig Luft mit eingeschlagen und feindispers verteilt wird. Das ist in der Regel nicht gewünscht. Um das Einschlagen von Luftblasen zu vermeiden, muss der Mischraum komplett mit der Mischung aus Schokolade und Wasser gefüllt sein. Alternativ ist das Mischen unter Vakuum möglich. Mischzeit und Scherintensität sind von der konkreten Auswahl der hydrophilen Lebensmittelzutat (z.B. wässrige Lösung mit mindestens einem ein- oder mehrwertigen Alkohol oder mindestens einem Zuckeralkohol, wasserlösliche Aromen mit Propylenglycol (Propandiol) als Trägersubstanz) der Auswahl der Mischsysteme und der als Zielgrößen zu definierenden Fließgrenze und Viskosität abhängig.

Die so entstandene Masse zeigt eine signifikant höhere Viskosität und Fließgrenze, ohne dass sich der Anteil an kristalliner Phase in der Fettschmelze erhöht. Der Anstieg der Viskosität und der Fließgrenze ergibt sich auf Grund der Tatsache, dass
1. der Fettanteil in Schokolade und fetthaltiger Füllmasse in der Regel gerade so hoch ist, dass die geforderten Fließeigenschaften (Fließgrenze und Viskosität) sichergestellt werden können,
2. ein Teil des freien und flüssigen Fettes in der vortemperierten Schokolade/Füllmasse mit dem Einbringen einer hydrophilen Lebensmittelzutat sofort durch Umschließen der feindispers verteilten Tropfen immobilisiert wird.

Die notwendige Dosiermenge an hydrophiler Lebensmittelzutat für das Einstellen einer gewünschten Fließgrenze und Viskosität hängt wesentlich von der Größe der feindispers verteilten Tropfen ab. Kleinere Tropfendurchmesser bedeuten eine Erhöhung der Oberfläche der hydrophilen Lebensmittelzutat in der Schokolade bzw. Füllmasse und damit eine stärkere Immobilisierung von flüssigem Fett. Die Folgen sind eine stärkere Erhöhung der Fließgrenze und der Viskosität. Einfluss auf die Tropfengröße haben die Zusammensetzung der hydrophilen Lebensmittelzutat sowie die Art und Intensität des Dispergierverfahrens. Zu beachten ist, dass während des Dispergierens die in der Schokolade/Füllmasse befindlichen Impfkristalle nicht durch zu hohen Energieeintrag bei der Scherung wieder aufgeschmolzen werden.

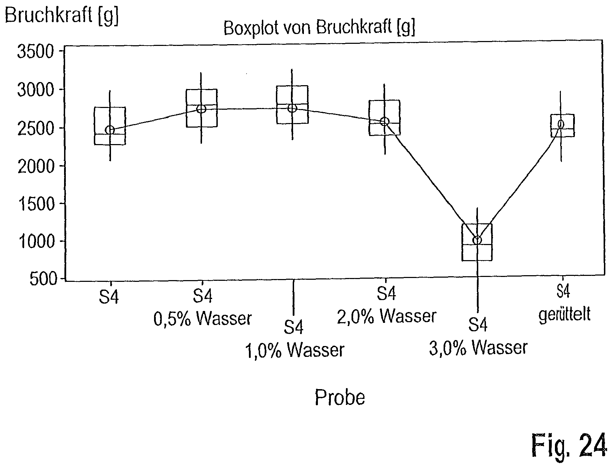

Die in den Ansprüchen definierte Erfindung wird nachfolgend anhand von Merkmalsgruppen weiter erläutert. Die Merkmalsgruppen beschreiben die erfindungsgemäßen Varianten in beliebiger Kombination:
- Dauerbackware und Verfahren zum Herstellen einer sandwichartigen Dauerbackware mit zwei im Wesentlichen plattenförmigen Gebäckteilen und einer zwischen diesen befindlichen, deutlich sichtbaren Zwischenlage in Form einer festen Füllung.
- Die formstabile und feste Füllung ist aus Schokolade und/oder einer vergleichbaren fetthaltigen Masse gefertigt.
- Die feste, auskristallisierte Füllung hat eine Dichte von mindestens 1 g/cm³, vorzugsweise 1,2 bis 1,3 g/cm³.
- Die Füllung ist deutlich sichtbar zwischen den beiden Gebäckteilen wahrnehmbar.
- Der Abstand der beiden Gebäckteile und damit die Höhe der Zwischenlage beträgt mindestens 2,5 mm.
- Der Abstand der beiden Gebäckteile und damit die Höhe der Zwischenlage beträgt maximal 15 mm.
- Durch den Abstand der beiden Gebäckteile ergibt sich eine Dicke der Zwischenschicht aus der erfindungsgemäßen Schokoladenmasse, welche bevorzugterweise 3 bis 7 mm dick ist, bevorzugterweise 3 bis 4 mm dick, bevorzugterweise 4 bis 15 mm.
- Die seitlichen Kanten der Füllmasse sind im Wesentlichen parallel und leicht nach innen versetzt zu den Kanten der Gebäckteile ausgebildet.
- Die seitliche Kontur ist so ausgebildet ist, dass die Kanten der Füllmasse im Wesentlichen mit den Seitenkanten der Gebäckteile abschließen.
- Die seitliche Kontur ist so ausgebildet ist, dass die Kanten der Füllmasse im Wesentlichen parallel zu den Seitenkanten der Gebäckteile hinausragen.
- Die Seitenflächen der Füllung weisen einen schokoladentypischen, seitenmatten Glanz auf.
- Die plattenförmigen Gebäckteile weisen im Wesentlichen die gleiche äußere Kontur auf, jedoch kann die Gestaltung der Flächen im Inneren der Kontur von Ober- und Unterseite abweichen.
- Die plattenförmigen Gebäckteile weisen im Wesentlichen die gleiche äußere Kontur auf, jedoch kann die Gestaltung der Flächen im Inneren der Kontur zwischen dem oberen und dem unteren Gebäckteil abweichen.
- Die Füllung ist ohne zusätzliche Fügemasse mit den Gebäckteilen verbunden.
- Die Gebäckteile und die Füllung sind fest miteinander verbunden und lassen sich nicht mehr zerstörungsfrei trennen.
- Das Gewichtsverhältnis von Gebäckteilen zu Füllung kann im Bereich von 3 zu 1 bis 1 zu 4 liegen.
- Das Gewichtsverhältnis von Gebäckteilen zu Füllung liegt vorzugsweise im Bereich von 2 zu 1 bis 1 zu 2.
- Die Füllmasse erzeugt beim Verzehr im Temperaturbereich von 20°C bis 25°C einen für eine Schokoladentafel vergleichbarer Dicke typischen sensorischen Eindruck.
- Die Partikelgrößenverteilung der Füllmassen liegt im Rahmen einer vor der Verarbeitung als Zwischenschicht vorgeschalteten Zerkleinerung mittels Walzwerken oder Kugelmühlen oder vergleichbarer Zerkleinerungsverfahren in dem für Schokoladen typischen Bereich.
- Die Füllung aus Schokolade bzw. schokoladenanaloge Füllmassen enthält eine hydrophile Lebensmittelzutat in einem Anteil von 0,01 bis 0,3 Massen-%, insbesondere 0,1 Massen-% bis 0,3 Massen-%, wobei die hydrophile Lebensmittelzutat Propylenglycol ist oder enthält oder eine Mischung aus Wasser und Propylenglycol ist oder enthält.
- Der Anteil an hydrophiler Lebensmittelzutat wird in Abhängigkeit vom Fettanteil der Schokolade bzw. der fetthaltigen, im Wesentlichen wasserfreien Füllmasse und der konkreten hydrophilen Lebensmittelzutat so gewählt, dass die zur Verarbeitung notwendige Erhöhung der Viskosität und Fließgrenze erzielt wird, sich aber die sensorischen Eigenschaften (Festigkeit) nach der Verfestigung und während der Lagerung nicht signifikant von nicht mit hydrophilen Lebensmittelzutaten behandelten Systemen unterscheiden (Figur 24). Das wird zum Beispiel bei Zugabemengen von < 2,5 Massen-% an hydrophiler Lebensmittelzutat bzw. < 0,5 Massen-% mehrwertigen Alkohol (Propylenglycol) sichergestellt.
- Zur Anhebung der Fließgrenze durch eine hydrophile Lebensmittelzutat sind alle Arten von wässriger Lösung oder Suspension mit mindestens einem ein- oder mehrwertige Alkohol oder mindestens einem Zuckeralkohol und vergleichbare Stoffsysteme einsetzbar, soweit sie nicht oder nur schlecht mit den in Schokolade oder fetthaltigen Füllungsmassen enthaltenen Fetten mischbar sind.
- Sowohl hochfetthaltige, niedrigviskose Schokoladen und Füllmassen mit Fettanteilen (> 32 Massen-% bis 50 Massen-%) als auch hochviskose, fettarme Schokoladen bzw. Füllmassen mit Fettanteilen im Bereich von 25 bis 32 Massen-% können als Basis für die Füllung eingesetzt werden.
- Die Zwischenschicht ist alternativ aus mehreren Füllmassen aufgebaut, die sich optisch und/oder sensorisch und/oder rezeptorisch unterscheiden.
- Die Zwischenschicht ist aus zwei bis fünf übereinander oder nebeneinander liegenden Füllmassen oder teilweise ineinander verlaufenden Füllmassen aufgebaut.
- In die Zwischenschicht sind stückige Teile mit einer minimalen Korngröße von 1 mm und einer maximalen Korngröße von 0,7 x Abstand der Gebäckteile in Millimeter eingearbeitet.
- Zwischen oder in die Füllung sind eine Zwischenschicht oder ein oder mehrere Füllvolumen mit einer wasserhaltigen Füllung eingearbeitet.
- Die wasserhaltige Füllung ist eine Marmelade, Konfitüre oder andere Fruchtzubereitung, wobei entweder nach dem Dosieren eine ausreichende Verfestigung stattfindet oder die wasserhaltige Füllung in einem oder mehreren Füllvolumen innerhalb der später festen Füllung positioniert wird.
- Die Füllungszwischenschicht ist eine Karamellfüllung, wobei entweder nach dem Dosieren eine ausreichende Verfestigung stattfindet oder die Karamellfüllung in einem oder mehreren Füllvolumen innerhalb der später festen Füllung positioniert wird.
- Die Zwischenfüllungsschicht besteht aus einer Zubereitung von Marzipan, Persipan oder analogen nusshaltigen Süßwarenmassen, die vorzugsweise komplett durch die fetthaltige(n) Füllmasse(n)/Schokolade(n) umschlossen wird.
- Verfahren zum Herstellen einer sandwichartigen Dauerbackware (wie obenstehend erläutert) mit zwei im Wesentlichen plattenförmigen Gebäckteilen und einer zwischen diesen befindlichen, deutlich sichtbaren Zwischenlage in Form einer festen Füllung, mit folgenden Arbeitsschritten:
   a. Herstellen oder Bereitstellen der Gebäckteile;
   b. Bereitstellen der fetthaltigen Füllmasse(n)/Schokolade(n);
   c. Vorbehandeln der flüssigen, fetthaltigen Füllmasse(n)/Schokolade(n) in einem ersten Schritt, so dass sich nach Abschluss dieses Verfahrensschrittes in dieser Impfkristalle befinden (vortemperierte Füllmasse(n)/Schokolade(n));
   d. Vorbehandeln der nach Arbeitsschritt (c.) noch flüssigen, vortemperierten Füllmasse der Art, dass in diese Füllmasse(n)/Schokolade(n) eine hydrophile Lebensmittelzutat feindispers und homogen durch Rühren verteilt wird, damit eine Wasser-in-ÖI-Emulsion mit einer signifikant höheren, über der kritischen Schubspannung liegenden Fließgrenze und einer signifikant höheren Viskosität hergestellt wird;
   e. Formen und Portionieren der vortemperierten, unter dem Eigengewicht von Füllmasse und Gebäckteilen im Wesentlichen nicht fließenden Füllmasse(n)/Schokolade(n) auf ein unterliegendes, zum Füllsystem ausgerichtetes Gebäckteil;
   f. Auflegen eines zweiten, ausgerichteten Gebäckteiles;
   g. Andrücken des oberen Gebäckteiles auf die Zwischenschicht und auf das untere Gebäckteil und gleichzeitiges Endformen der Zwischenschicht;
   h. Endkühlen der sandwichartigen Dauerbackware.
- Die hydrophile Lebensmittelzutat wird in die vortemperierte Füllmasse durch schnelles Einmischen (Homogenisieren) mit einem Rührwerkzeug eingebracht und feindispers verteilt und dabei sichergestellt, dass ein ausreichender Anteil an Impfkristallen erhalten bleibt.
- Die hydrophile Lebensmittelzutat wird in die vortemperierte Füllmasse durch schnelles Einmischen mit einem Rührwerkzeug vorzugsweise in einem Rührraum ohne Anwesenheit von Luft oder anderen Gasen, die sonst in der Füllmasse feindispers verteilt werden könnten, oder unter Vakuum eingebracht.
- Die Menge an hydrophiler Lebensmittelzutat in der Füllmasse liegt im Bereich 0,01 bis 0,3 Massen-%, bevorzugterweise im Bereich 0,1 Massen-% bis 0,3 Massen-%, in Abhängigkeit von dem Fettgehalt und den Fließeigenschaften der wasserfreien, vortemperierten Schokolade/Füllmasse, der notwendigen Erhöhung der Fließgrenze, der Zusammensetzung der hydrophilen Lebensmittelzutat und des Dispergierverfahrens, wobei die hydrophile Lebensmittelzutat Propylenglycol ist oder enthält oder die hydrophile Lebensmittelzutat eine Mischung aus Wasser und Propylenglycol ist oder enthält.
- Die Form der Füllung wird durch Auspressen durch eine Düse und Öffnen und Schließen der Düse durch einen Verschluss bestimmt, wobei der Querschnitt der Düse, die Höhe und Breite der Füllschicht und die Dauer des Dosiervorganges die Länge der Füllschicht bestimmen.
- Das Auspressen und Auflegen der Füllschicht erfolgt durch vertikales Auspressen der Füllschicht auf das Gebäckunterteil und Schneiden der Füllschicht mit einem (vorzugsweise beheizten oder vibrierenden) Draht oder einem (vorzugsweise beheizten oder vibrierenden) Messer.
- Das erste Gebäckteil wird vor dem Portionieren der Füllmasse derart zum Füllsystem in Position gebracht, dass ein präzises Aufbringen der Füllmasse sichergestellt wird.
- Während des Aufbringens der Füllmasse beträgt die Relativgeschwindigkeit zwischen Füllwerkzeug und dem Trägersystem für das Gebäckteil bzw. zwischen Füllmasse und unterem Gebäckteil annähernd Null.
- Das Füllwerkzeug bewegt sich während des Aufbringens der Füllmasse in einer von der Geschwindigkeit des unteren Gebäckteiles unterschiedlichen Geschwindigkeit.
- Das zweite Gebäckstück wird durch einen pneumatischen Sauger oder ein Greiferwerkzeug aufgenommen und lagegenau und präzise auf die vorliegende Einheit aus unterliegendem Gebäckteil und aufliegender Füllmasse aufgesetzt und angedrückt, wobei durch das Anpressen die Füllung in ihre Endform gebracht wird.
- Die Ausformung der Füllmasse erfolgt vertikal und die Verbindung der Gebäckteile mit der Füllschicht erfolgt im Wesentlichen zeitgleich durch seitliches Zuführen und paralleles Anpressen der Gebäckteile und nachgeschaltetes Trennen der Füllungsportion vom ausgepressten Stang.
- Die Ausformung der Füllmasse erfolgt vertikal und die portionierte Füllmasse wird an den späteren Seitenkanten von einem Fördersystem übernommen. In einem Folgeschritt werden die Gebäckteile mit der Füllschicht durch im Wesentlichen zeitgleiches, seitliches Zuführen und paralleles Anpressen der Gebäckteile verbunden.
- Die Ausformung der Füllmasse erfolgt über das Einpressen der Füllmasse in eine Form, die durch die Kontur eines Kolbens, der sich in einer Führung bewegt, definiert wird, und das nachfolgende Ausdrücken dieser Füllmasse auf das erste Gebäckteil, durch die Bewegung des Zylinders und Trennen der Füllungsschicht vom Zylinderstempel durch einen beheizten Draht und durch Abziehen des vorzugsweise temperierten Zylinderstempels vom unterliegenden Verbund aus Keks und Füllung.
- Das Verfahren wird mittels eines rotierenden Systems in Form einer umlaufenden Trommel mit Stempeln bzw. eines oder mehrerer umlaufender Ringe mit Stempeln durchgeführt.
- Das Verfahren wird mittels eines rotierenden Systems in Form einer umlaufenden Trommel mit Aussparungen versehenen Trommel oder eines entsprechenden umlaufenden Ringes, über dem ein Trichter mit Füllmasse angeordnet ist und das die in die Kavitäten der Trommel hineingedrückte Füllmasse auf die synchron unter der Trommel durchlaufenden Gebäckunterteile übergibt, durchgeführt, wobei das Material der Kontaktfläche zwischen Füllmasse und Trommel bzw. Ring sowie die Temperatur der Trommel bzw. des Ringes so gewählt wird, dass die Haftkräfte durch das Eigengewicht des Füllungskörpers überwunden werden.
- Durch die Düse werden über mehrere Zulaufkanäle gleichzeitig mehrere Füllmassen gepresst, geformt und portioniert.
- Mehrere Füllmassen werden zeitlich nacheinander übereinander oder nebeneinander auf dem unteren Gebäckteil positioniert.
- Mindestens zwei oder mehr Füllmassen werden ineinander verlaufend durch eine Düse gepresst.
- Die sandwichartige Verbindung aus zwei Gebäckteilen und einer aus einer oder mehreren Füllmassen bestehenden Füllung wird in einem Folgeschritt mit dem Ziel gekühlt, die Kristallisation der Fette so_weit zu führen, dass die Produkte lagerstabil und für den anschließenden Verpackungsprozess ausreichend verfestigt sind.
- Die Kühlbedingungen werden so gewählt, dass sowohl die optimale Kristallisation der Füllung (Schokolade) als auch der Erhalt der gewünschten Texturmerkmale der Gebäckteile sichergestellt wird.

Im Folgenden wird die in den Ansprüchen definierte Erfindung sowie die dieser zu Grunde liegenden Erkenntnisse anhand von Ausführungsbeispielen in Verbindung mit der Zeichnung beschrieben. Dabei zeigt:
- Fig. 1: eine vereinfachte perspektivische Darstellung der erfindungsgemäßen Dauerbackware,
- Fig. 2: eine Teil-Explosionsansicht der Darstellung gemäß Fig. 1,
- Fig. 3 bis 5: Seitenansichten unterschiedlicher Ausgestaltungsvarianten der Breite der Zwischenschicht,
- Fig. 6 bis 10: unterschiedliche Ausgestaltungsvarianten der erfindungsgemäßen Zwischenschicht,
- Fig. 11: Viskositäts-Spannungskurven einer untemperierten Schokoladenmasse mit unterschiedlichen Anteilen an Wasser,
- Fig. 12: eine Darstellung, analog Fig. 11, unterschiedlicher Viskositäts-Spannungskurven einer temperierten Schokolade ohne Zugabe von Wasser und mit Zugabe von 0,4 Massen-% Wasser,
- Fig. 12a: eine Darstellung, analog Fig. 12, unterschiedlicher Viskositäts-Spannungskurven einer temperierten Schokolade mit unterschiedlichen Anteilen an Propylenglycol,
- Fig. 12b: eine Darstellung, analog Fig. 12, unterschiedlicher Viskositäts-Spannungskurven einer temperierten Schokolade mit unterschiedlichen Anteilen einer Mischung aus Wasser und Propylenglycol
- Fig. 13a u. 13b: Ablaufdiagramme von Ausgestaltungsvarianten des erfindungsgemäßen Herstellungsverfahrens,
- Fig. 14 bis 16: schematische Seitenansichten einer Vorrichtung zur Aufbringung der Zwischenschicht mittels einer Düse,
- Fig. 17 bis 21: schematische Ansichten einer weiteren erfindungsgemäßen Vorrichtung zur Aufbringung der Zwischenschicht in aufeinanderfolgenden Arbeitsschritten,
- Fig. 22: eine schematische Darstellung einer weiteren erfindungsgemäßen Vorrichtung,
- Fig. 23: eine grafische Darstellung zum Vergleich einer temperierten Schokoladenschmelze vor und nach der Behandlung mit Wasser,
- Fig. 24: eine grafische Darstellung des Einflusses des Gehalts an Wasser auf die Textur von Schokolade und
- Fig. 25: Viskositäts-Schubspannungskurven verschiedener Schokoladen.

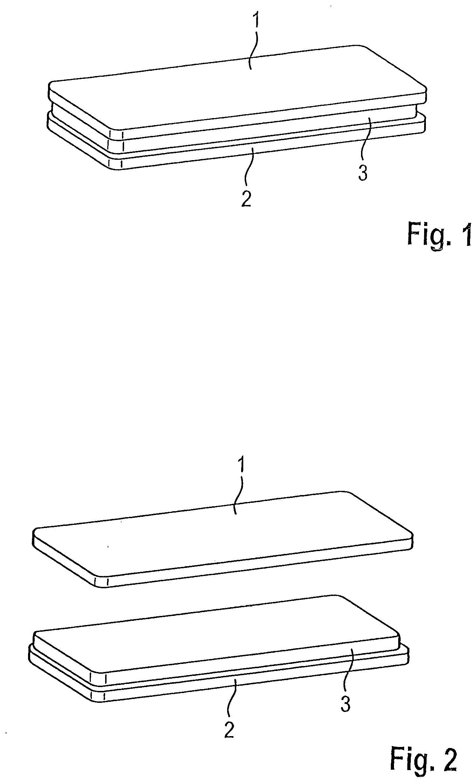

Die Fig. 1 und 2 zeigen in vereinfachter schematischer Darstellung ein Ausführungsbeispiel einer erfindungsgemäßen Dauerbackware in Form eines Sandwichgebäcks. Das Sandwichgebäck umfasst ein oberes Gebäckteil 1 sowie ein unteres Gebäckteil 2, welches in Form von plattenförmigen Keksen ausgebildet ist. Die Fig. 1 zeigt eine sehr schematische Darstellung, bei welcher die Gebäckteile 1, 2 quaderförmig ausgebildet sind. Es versteht sich, dass die Seitenflächen der Gebäckteile 1 und 2 gerippt, gewellt oder in anderer Weise strukturiert sein können. Gleiches gilt für die jeweiligen oberen und unteren Flächen der Gebäckteile 1 und 2 (sichtbare Flächen sowie Kontaktflächen zur Zwischenschicht 3).

Zwischen den beiden Gebäckteilen 1 und 2 ist eine plattenförmige Füllung angeordnet, welche eine Zwischenschicht 3 bildet und somit eine Füllmasse darstellt.

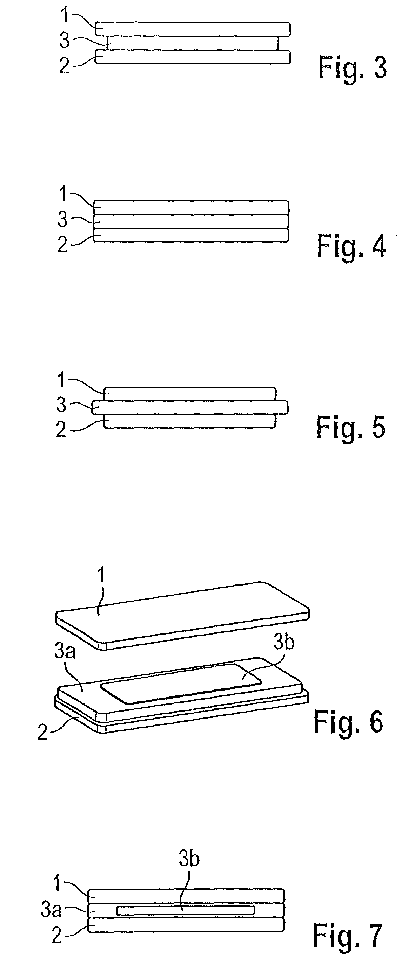

Die Fig. 3 bis 5 zeigen vereinfachte Seitenansichten möglicher Ausgestaltungsvarianten, welche sich hinsichtlich der Breite der Zwischenschicht 3 unterscheiden. In Fig. 3 ist die Zwischenschicht mit einer schmäleren Breite ausgebildet, so dass die seitlichen Kanten der Gebäckteile 1 und 2 seitlich vorstehen. Bei dem in Fig. 4 gezeigten Ausführungsbeispiel ist eine bündige Ausgestaltung der Zwischenschicht 3 vorgesehen, während die Fig. 5 ein Ausführungsbeispiel zeigt, bei welchem die Zwischenschicht (Füllmasse) 3 seitlich über die Kanten der Gebäckstücke 1 und 2 vorsteht.

Die Fig. 6 bis 10 zeigen Ausgestaltungsvarianten der Zwischenschicht 3. Diese kann, so wie dies in Fig. 6 dargestellt ist, eine rahmenartige Zwischenschicht 3a aufweisen, in deren Zentrum eine weitere Zwischenschicht 3b angeordnet ist. Diese kann sich von der Zwischenschicht 3a unterschieden. Die Fig. 7 zeigt eine Variante, bei welcher die Zwischenschicht 3b sowohl seitlich als auch oben und unten von der Masse der Zwischenschicht 3a umschlossen ist. Somit ist es möglich, gemäß dem Ausführungsbeispiel der Fig. 6 und 7 beispielsweise eine weichere oder flüssigere Zwischenschichtenmasse 3b in eine härtere erfindungsgemäße Zwischenschichtmasse 3a einzuschließen.

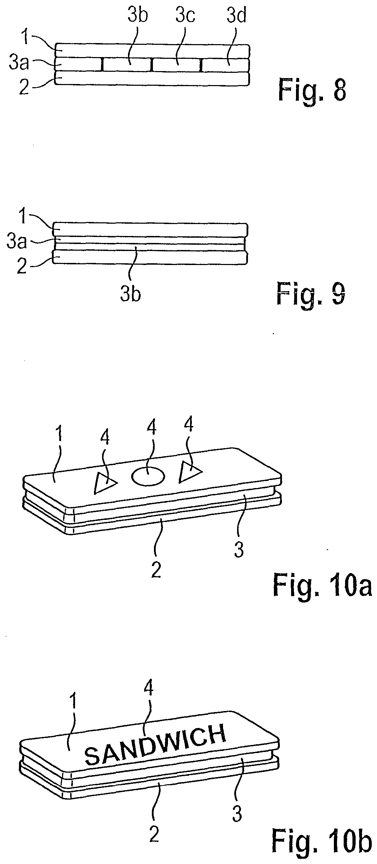

Die Fig. 8 und 9 zeigen Ausgestaltungsvarianten mit mehreren Zwischenschichten. Gemäß Fig. 8 sind diese Zwischenschichten 3a bis 3d streifenförmig nebeneinander eingelegt, während gemäß dem Ausführungsbeispiel der Fig. 9 die beiden Zwischenschichten 3a und 3b übereinander angeordnet sind. Die Fig. 10a und 10b zeigen Varianten, bei welcher das obere Gebäckteil 1 mit Ausnehmungen 4 versehen ist, durch welche die Zwischenschicht 3 sichtbar ist und/oder durch welche Teile der Zwischenschicht 3 in die Ausnehmungen eingepresst werden.

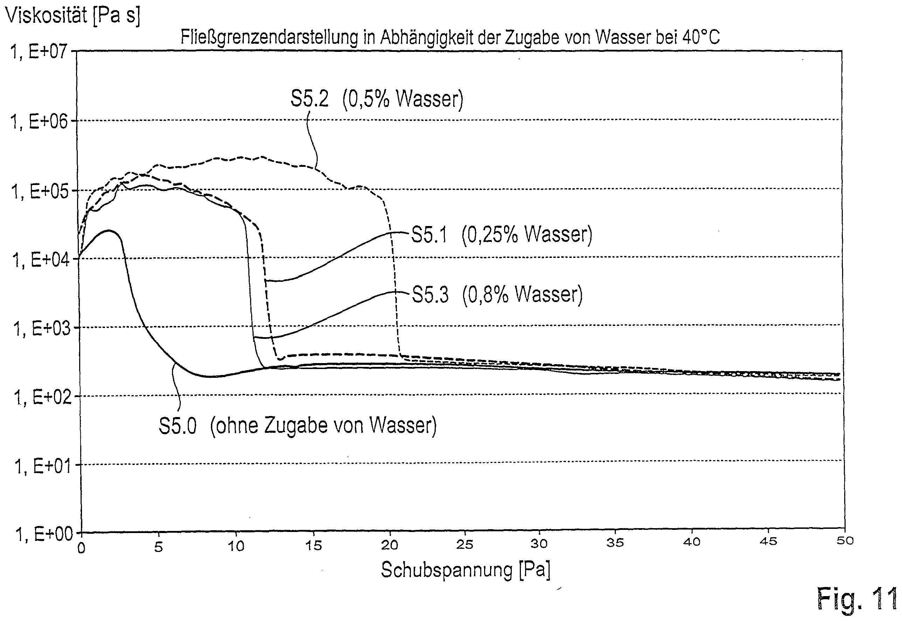

Die Fig. 11 zeigt exemplarisch die Veränderung der Fließgrenze der Schokoladen bei Zugabe von unterschiedlichen Anteilen Wasser im Vergleich zur unbehandelten Probe S5 (ohne Zusatz von Wasser) im untemperierten Zustand bei 40°C. Sehr deutlich zeigt sich, dass die Zugabe von Wasser im Anteil von 0,5 % zur stärksten Verschiebung der Fließgrenze führt. Bei Zugabe von 0,8 % Wasser wurde ein ähnlicher Effekt auf die Beeinflussung von Viskosität und Fließgrenze erreicht wie bei Zugabe von 0,25 %.

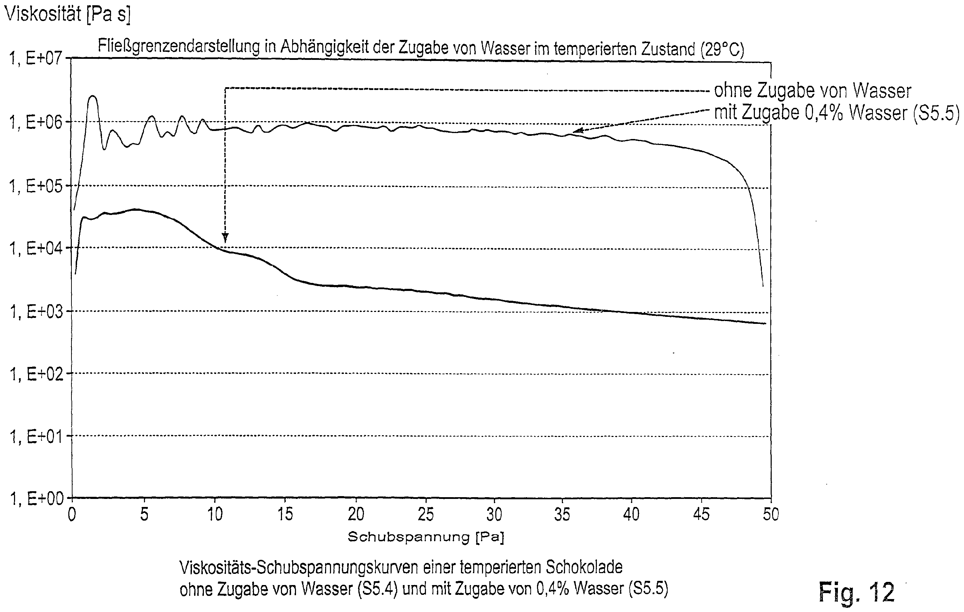

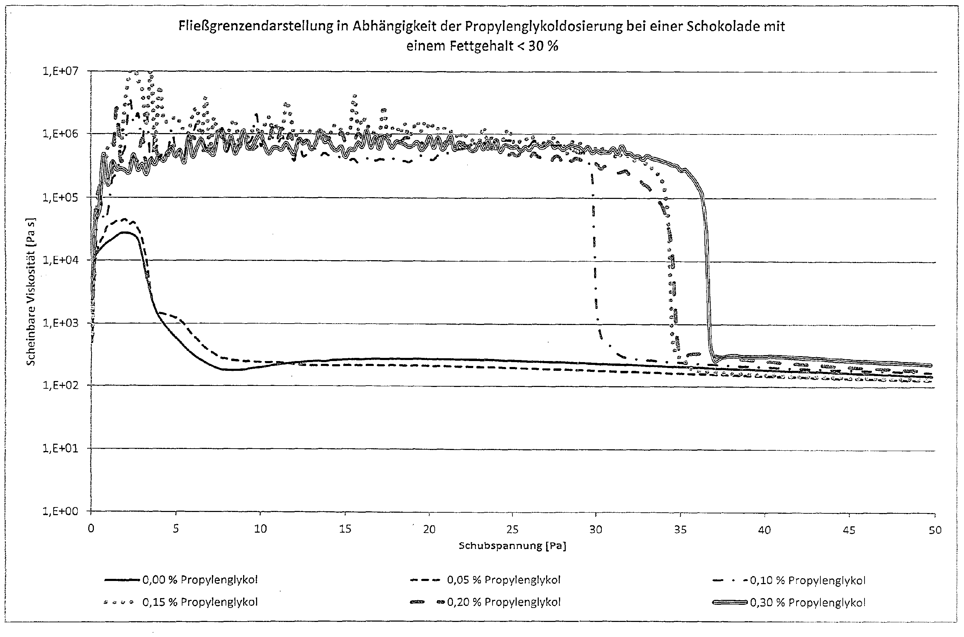

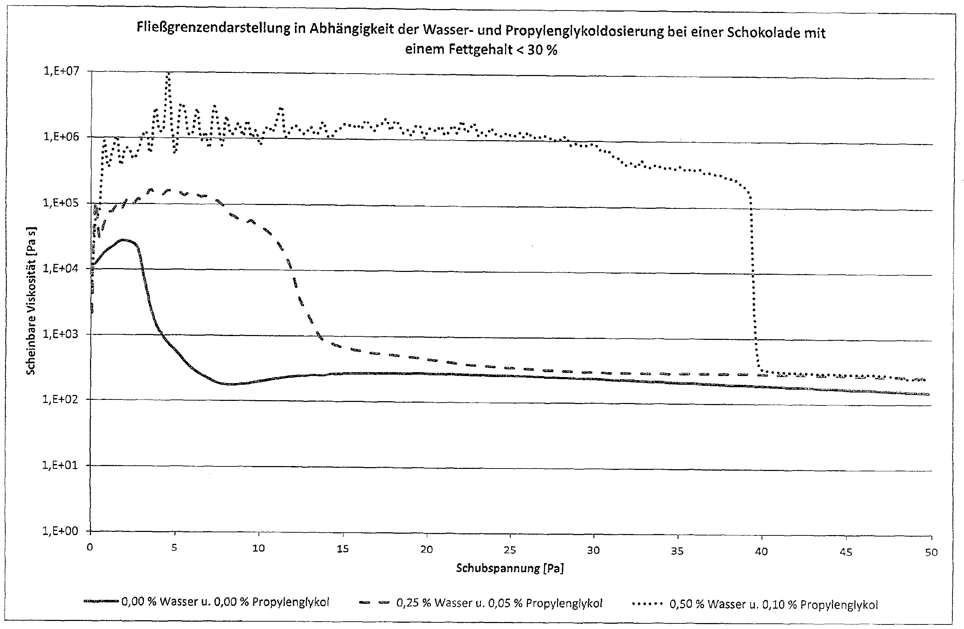

Die Fig. 12 zeigt exemplarisch die Wirkung der Zugabe von Wasser im temperierten Zustand. Bei Zugabe von 0,4 % kommt es zu einem deutlichen Anstieg der Fließgrenze. Mit dieser Zugabe wird jetzt eine Masse erzeugt, die eine Fließgrenze im Bereich von 50 Pa bei 29°C hat. Eine derartige Masse lässt sich gut portionieren und formen.

Die Fig. 12a zeigt exemplarisch die Veränderung der Fließgrenze von Schokoladen mit einem Fettgehalt von weniger als 30% bei Zugabe von unterschiedlichen Anteilen Propylenglycol als hydrophile Lebensmittelzutat im Vergleich zu einer unbehandelten Probe (ohne Zusatz von Propylenglycol) im temperierten Zustand bei etwa 29°C. Gut zu erkennen ist, dass bereits eine sehr geringe Zugabe von Propylenglycol, von hier beispielhaft gezeigt 0,05 Massen-%, eine Erhöhung der Viskosität sowie der Fließgrenze der Schokolade bewirkt. Deutlicher ist dieser Effekt noch für Anteile an Propylenglycol in der Schokolade von 0,1 Massen-% bis 0,3 Massen-%. Hier war auch die Einarbeitung von Propylenglycol in die Schokoladenmasse besonders homogen. Das Propylenglycol verteilte sich insbesondere im Vergleich zu Wasser, feindispers, so dass eine pastöse, streichfähige und gleichförmige Masse mit hoher Viskosität und hoher Fließgrenze entstand.

Die Fig. 12b zeigt exemplarisch die Veränderung der Fließgrenze von Schokoladen mit einem Fettgehalt von weniger als 30% bei Zugabe von unterschiedlichen Anteilen eines Gemisches aus Wasser und Propylenglycol als hydrophile Lebensmittelzutat im Vergleich zu einer unbehandelten Probe (ohne Zusatz von Wasser und ohne Zusatz von Propylenglycol) im temperierten Zustand bei etwa 29°C. Auch hier ist gut zu erkennen, dass bereits eine sehr geringe Zugabe an hydrophiler Lebensmittelzutat, beispielsweise in Anteilen von 0,30 Massen-% (0,25 Massen-% Wasser und 0,05 Massen-% Propylenglycol) oder 0,60 Massen-% (0,50 Massen-% Wasser und 0,10 Massen-% Propylenglycol), eine Erhöhung der Viskosität sowie der Fließgrenze der Schokolade bewirkt. Die Einarbeitung des Gemisches aus Wasser und Propylenglycol war einfach möglich. Es wurde eine homogene, pastöse und streichfähige Masse mit hoher Viskosität und hoher Fließgrenze erhalten.

Insgesamt ist somit festzustellen, dass die messtechnischen Untersuchungen sich mit den erfindungsgemäßen Erfahrungen bei der Verarbeitung von temperierter Schokolade decken. Beispielsweise zeigte sich, dass die Zugabe von 0,2 bis 0,6 Massen-% Wasser (bezogen auf den Anteil an Wasser in der hydrophilen Lebensmittelzutat) den besten Effekt für Schokoladen mit ca. 27 bis 30 % Fettgehalt hatte. Für Aromen mit Propylenglycol als Trägerstoff ergibt sich eine vorteilhafte Dosiermenge von 0,1 % (bezogen auf den Gehalt an Propylenglycol in der hydrophilen Lebensmittelzutat).

Die optimale Menge an hydrophiler Lebensmittelzutat wird zusätzlich vom Fettgehalt der Schokolade und der Art und dem Grad der Vortemperierung beeinflusst. Für fettarme Schokoladen mit einem Temperiergrad (gemessen mit einem Temperiergradmessgerät der Firma SOLLICH) von 5 bis 6 wurde eine Dosiermenge von 0,4 bis 0,5 Massen-% bezogen auf den Anteil an Wasser bzw. 0,07 bis 0,15 Massen-% bezogen auf den Anteil an Propylenglycol in der hydrophilen Lebensmittelzutat bei einer angestrebten Schichtdicke von 5 mm als optimal ermittelt.

Zum Beispiel ergibt sich für ein erfindungsgemäßes Sandwichprodukt mit einer Schichtdicke von 5 mm Füllung mit einer Dichte von 1,260 g/cm³ und einem Keks mit einer Höhe von 5 mm und einer Dichte von 0,850 g/cm³ eine kritische Schubspannung für die Füllung von ungefähr 42 Pa. Mit dem Anstieg der Füllungsschicht pro Millimeter erhöht sich die kritische Schubspannung um ca. 5,5 bis 6 Pa.

Herkömmliche Schubspannungswerte für nichttemperierte fettreiche Schokoladen liegen im Bereich < 2 Pa und für fettarme Schokoladen < 5 Pa. Angemerkt sei an dieser Stelle, dass alle hier ausgeführten rheologischen Untersuchungen mit einem KINEXUS-Viskosimeter der Firma Malvern unter Anwendung eines Platte-Platte-System mit einem Durchmesser von 50 mm und einem Abstand der Platten von 1 mm durchgeführt wurden. Die Schubspannungen wurden innerhalb von 100 s von 0 auf 50 Pa über eine linear verlaufende Rampe erhöht.

Im temperierten Zustand erhöht sich die Fließgrenze. Beispielhaft erfolgt die Messung der Viskosität und Fließgrenze für eine fettarme Schokolade mit 28 % Fett. Die Fließgrenze steigt dabei auf einen Bereich von ca. 7 Pa, bevor das Fließen einsetzt (siehe Fig. 11).

Die Anhebung der Fließgrenze in den oben ermittelten theoretischen Bereich von 40 bis 50 Pa und gegebenenfalls höher ist bisher in der Verarbeitung von Schokoladen kein üblicher Verfahrensschritt. Vielmehr zielt die Technologie der Verarbeitung von Schokoladen gemäß dem Stand der Technik beim Überziehen oder der Herstellung von ausgeformter Schokolade auf Eintafelanlagen auf die Einstellung einer niedrigen Viskosität und Fließgrenze.

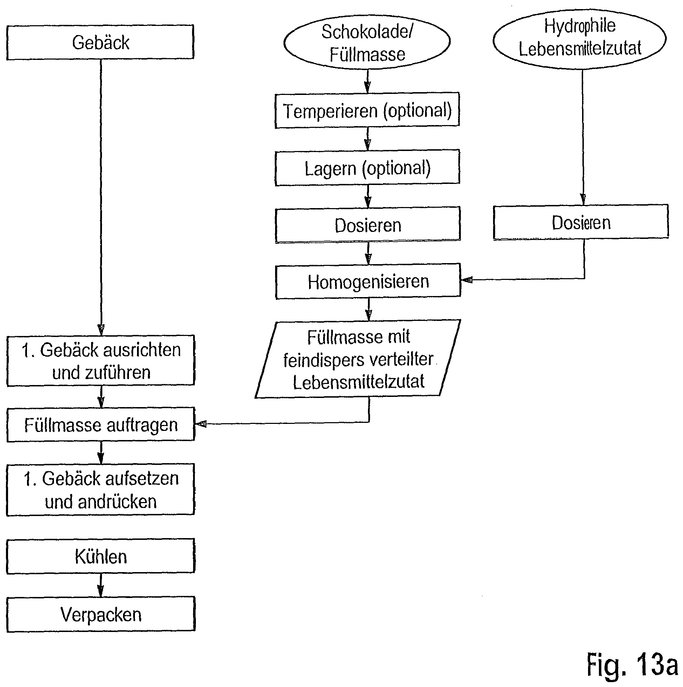

Die Fig. 13a zeigt ein Ablaufdiagramm des erfindungsgemäßen Herstellungsverfahrens. Das obere Gebäckteil 1 und das untere Gebäckteil 2 werden in üblicher Weise vorbereitet und gebacken. Parallel dazu erfolgt die Herstellung der Füllmasse der Zwischenschicht 3. Diese wird nachfolgend temperiert, beispielsweise auf eine Temperatur zwischen 24°C und 33°C. Unter Temperieren wird erfindungsgemäß das Herstellen einer Schmelze verstanden. Dazu wird in der Regel die Schokoladenmasse zunächst auf Temperaturen < 26°C unterkühlt, und danach wieder in den Bereich von ca. 28°C bis 32°C erwärmt. Hierbei werden Impfkristalle (Beta-V-Kristalle) gezüchtet. Diese Impfkristalle, welche zur nachfolgenden Kristallisation dienen, können erfindungsgemäß jedoch auch in Form von Pulver oder als geraspelte Schokolade beigegeben werden. Es könnte auch eine Kakaobutter-Impfkristall-Suspension (Kakaobutterschmelze) zugegeben werden. Die Füllmasse der Zwischenschicht 3 wird nach dem Temperieren gelagert, dann dosiert, dann homogenisiert und dabei mit dem vorgegebenen Anteil an hydrophiler Lebensmittelzutat gemischt. Diese homogenisierte Masse wird als Füllmasse auf das erste Gebäckteil aufgetragen. Nachfolgend wird das zweite Gebäckteil aufgesetzt und angedrückt. Das fertige Sandwichgebäck wird nachfolgend gekühlt und verpackt.

Bei dem erfindungsgemäßen Verfahren werden somit für die Herstellung eines sandwichartigen Produktes mit einer Schokoladenfüllung die Fließeigenschaften der Schokolade gezielt durch eine geeignete Vortemperierung und die Erzeugung oder Einbringung von Impfkristallen (Beta-V-Impfkristalle für Schokolade) und das nachfolgende Einbringen und homogene Verteilen einer hydrophilen Lebensmittelzutat bewusst so eingestellt, dass die Fließgrenze der vorbehandelten Masse zum Zeitpunkt des Portionieren bzw. Füllens oberhalb der kritischen Schubspannung ist. Damit ist es möglich, eine formstabile, pastöse Füllschicht aus Schokolade oder eine adäquate fetthaltige Füllung zwischen zwei Gebäckstücke (Kekse) zu platzieren.

Das Herstellen des erfindungsgemäßen Sandwiches kann auf unterschiedlichem Wege erfolgen. In einer konkreten Ausführung wird die Füllmasse auf ein bereitliegendes Gebäckstück dosiert. Der Querschnitt einer Düse entspricht dabei dem Querschnitt aus Füllhöhe und Füllungsbreite bzw. Füllungslänge. Durch eine relative Längsbewegung des Gebäckstückes zur Fülldüse wird ein gleichmäßig ausgeformter Füllungsstrang aufgelegt. Zur Sicherstellung eines gleichmäßigen Volumenstromes an Füllung wird die Füllung vorzugsweise mit einer Pumpe durch die Düse gefördert. Der Dosiervorgang wird mit dem Stoppen der Pumpe beendet. Zur Sicherstellung eines präzisen Abrisses wird zusätzlich Masse aus der Düse durch einen Rücksaughub zurückgezogen und zeitgleich die aus der Düse austretende Füllmasse durch einen Schieber vom Düsenkopf getrennt. Das Material der Fülldüse und des Schiebers sind bezüglich der Oberflächen so auszuwählen, dass fetthaltige Massen möglichst wenig anhaften. Zusätzlich ist es vorteilhaft, Fülldüse und Schieber zu beheizen. Für Schokolade sind Oberflächentemperaturen von 30°C bis 34°C vorteilhaft.

In einem zweiten Schritt wird das zweite Gebäckstück, wie erwähnt, auf die Einheit aus untenliegendem Gebäckstück und Füllmasse aufgelegt. Durch definiertes Andrücken des oberen Gebäckstückes auf das untere Gebäckstück erfolgen das Endformen der Füllschicht und die Sicherstellung einer guten Kontaktschicht zwischen der Füllung und den jeweiligen Innenseiten des oberen und des unteren Gebäckteiles. Das ist relevant für die Sicherstellung einer guten und stabilen Verbindung von Füllungsschicht und den beiden Gebäcken.

Im Anschluss an diesen Arbeitsschritt schließt sich die Endkühlung des verbundenen Sandwich-Stückes an. In Abhängigkeit von dem konkreten Stückaufbau (Gewicht, Dimensionen) sind die Kühlzeiten ausreichend zu wählen. Für Gebäcke mit einer Schichtdicke von 6 bis 10 mm werden Mindestkühlzeiten von 15 Minuten bei einer Kühltemperatur von 14° bis 16°C empfohlen. Optimal sind Kühlzeiten von 30 Minuten. Zu beachten ist die Einstellung einer für Gebäcke geeigneten Luftfeuchtigkeit im Kühler, so dass es zu keiner unerwünschten Erhöhung der Gebäckfeuchte während des Kühlprozesses kommt.

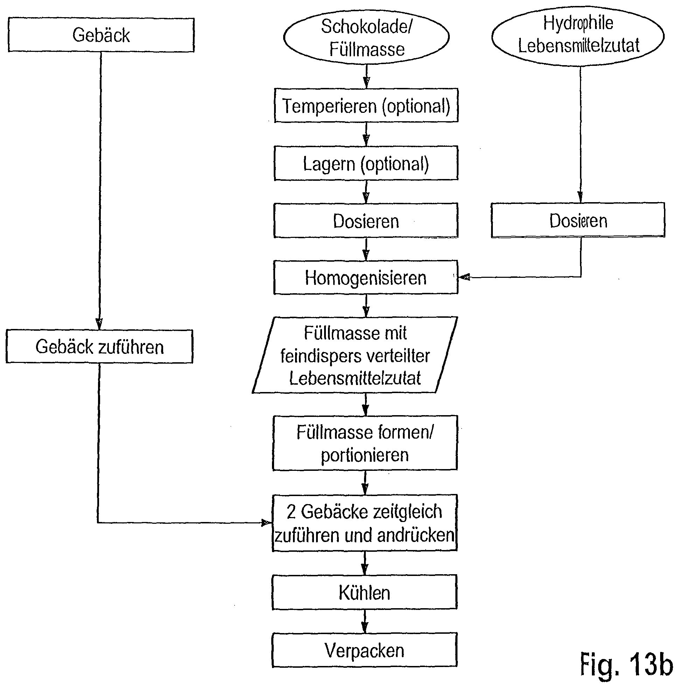

Eine andere Variante zur Herstellung des Sandwiches aus Füllmasse und zwei Gebäckstücken besteht in dem Auspressen der Füllmasse aus einer Düse und dem gleichzeitigen, seitlichen Zuführen und Anpressen der Gebäckstücke. Das Trennen der Schokolade kann danach zum Beispiel durch einen beheizten oder vibrierenden Draht oder ein Messer erfolgen (siehe Fig. 13b).

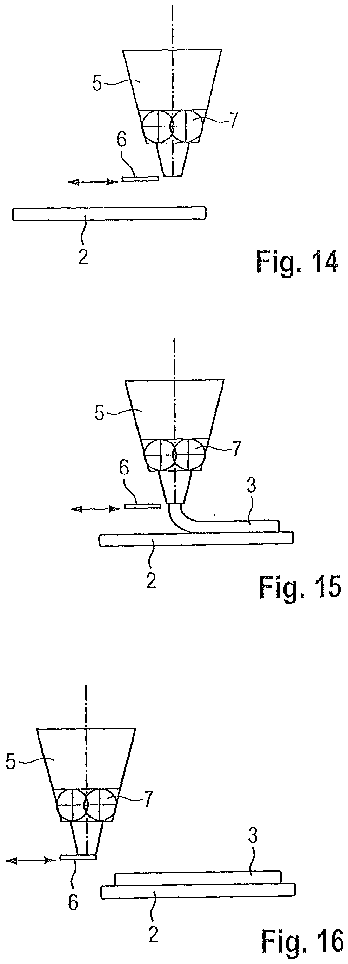

Die Fig. 14 bis 16 zeigen in vereinfachter Darstellung eine Vorrichtung zur Aufbringung der erfindungsgemäßen Füllmasse. Diese umfasst eine Pumpe 7, welcher eine Düse 5 nachgeordnet ist. Wie in Fig. 14 dargestellt, wird die Füllmasse mittels der Pumpe 7 durch die Düse 5 ausgedrückt. Ein Schieber 6 ist dabei geöffnet. Zugleich wird ein unteres Gebäckteil 2 antransportiert. Die Fig. 15 zeigt den Vorgang des Auflegens der Füllmasse 3 auf das untere Gebäckteil 2. Bedingt durch die hohe Viskosität der Füllmasse wird diese in Form einer zähen Schicht auf das untere Gebäckteil 2 aufgelegt. Nach vollständigem Aufbringen der Zwischenschicht 3 schließt der Schieber 6 die Düse 5, so dass ein nächstes unteres Gebäckteil 2 in den Bereich der Düse 5 gebracht werden kann.

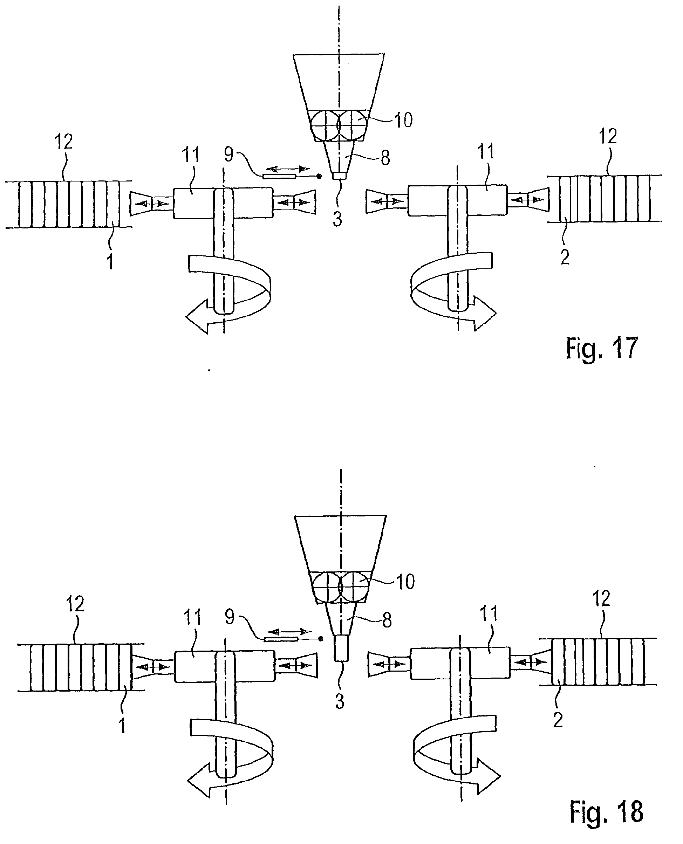

Die Fig. 17 zeigt ein Füllsystem zum Ausformen und zeitgleichen Positionieren von Keksen gemäß einem weiteren Ausführungsbeispiel der Erfindung. Das Bezugszeichen 8 zeigt eine Düse, welcher eine Pumpe 10 zugeordnet ist. Oberhalb der Pumpe befindet sich ein Vorratsbehälter für die Masse. Der Auslass der Düse 8 ist mittels eines Schiebers 9 zu öffnen bzw. zu schließen, so wie dies durch den Doppelpfeil dargestellt ist. Das Bezugszeichen 11 zeigt eine Transportvorrichtung. Dabei handelt es sich um ein rotierendes System, welches um eine Achse drehbar ist, so wie dies durch die beiden Pfeile dargestellt ist. Weiterhin ist die Transportvorrichtung 11 seitlich verschiebbar, so wie dies ebenfalls durch die Doppelpfeile dargestellt ist. Die Transportvorrichtung 11 umfasst einen Sauger oder Greifer oder Ähnliches, um einzelne Backprodukte von einem Backproduktestapel 12 (Keksstapel) zu entnehmen und durch die Drehung um die Achse der Transportvorrichtung 11 in Richtung auf die Düse 8 zu transportieren.

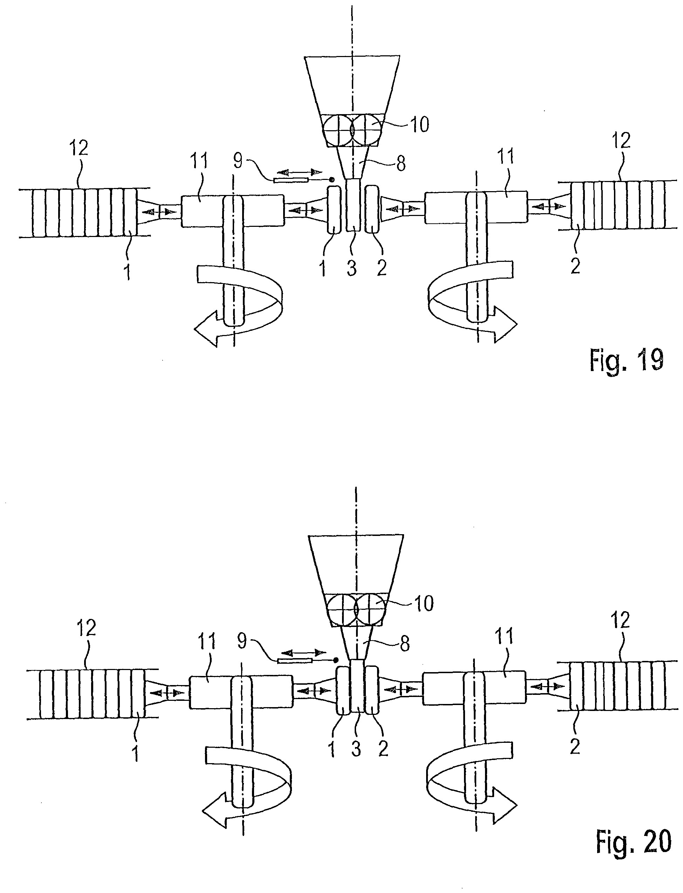

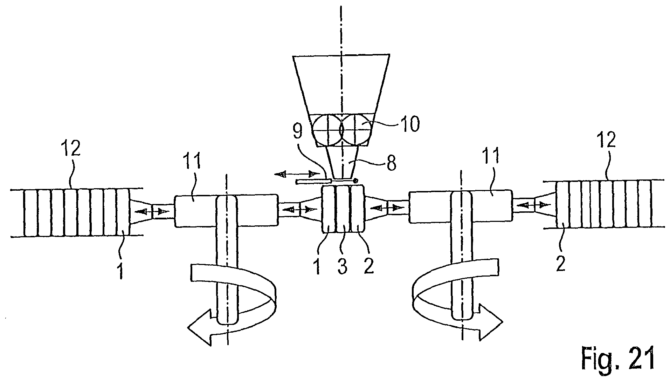

Die Fig. 18 zeigt den ersten Arbeitsschritt, bei welchem die Transportvorrichtung 11 in Richtung auf den jeweiligen Backproduktestapel 12 bewegt wurde und mit dem zugehörigen Sauger ein Backprodukt (Keks) greift. Der Schieber 9 hat den Auslass der Düse 8 immer noch geöffnet, so dass eine Menge an Füllmasse aus der Düse 8 austritt. Die Fig. 19 zeigt den nächsten Arbeitsschritt, nämlich das Ausformen der Füllmasse/Schokolade und das Zuordnen der Backprodukte. Im Vergleich zu Fig. 18 ist zu erkennen, dass die Transportvorrichtung 11 sich gedreht hat, so dass zwei Backprodukte jeweils neben einem ausgetretenen Strang der Füllmasse 3 angeordnet sind. Der Schieber 9 ist weiterhin geöffnet. Die Fig. 20 zeigt den nächsten Arbeitsschritt, bei welchem die Backprodukte gegen die Füllmasse 3 angedrückt werden. Die Fig. 21 zeigt den nachfolgenden Arbeitsschritt, nämlich das Trennen der Füllungsportion und das Abfördern des Sandwiches. Hierzu schließt der Schieber 9 den Auslass der Düse 8, so dass das aus den Backprodukten 1 und 2 sowie der Füllmasse 3 bestehende sandwichartige Backprodukt abtransportiert und weiterverarbeitet werden kann.

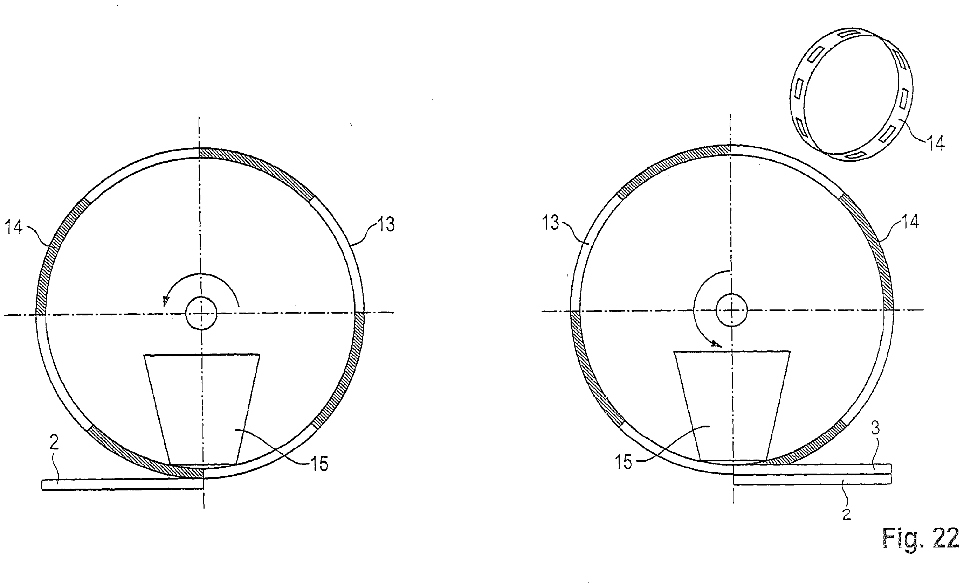

Die Fig. 22 zeigt eine weitere Variante einer erfindungsgemäßen Vorrichtung. Diese umfasst einen Ring oder eine Trommel 14 mit am Umfang angeordneten Ausnehmungen 13. Die Trommel 14 wirkt dabei wie ein Schieber und dreht sich um die dargestellte Mittelachse. Das Bezugszeichen 15 beschreibt einen Trichter oder eine Düse. Der Trichter kann einen leichten Überdruck aufweisen, in ihm befindet sich die Füllmasse. Die linke Hälfte der Fig. 22 zeigt den Start des Füllauftrags. Dabei wird ein Backprodukt 2 unter den Trichter 15 bzw. unter die Trommel 14 geschoben. Durch Zuordnung der geeigneten Ausnehmung 13 erfolgt ein Auspressen der Füllmasse 3 während einer Längsbewegung des Backprodukts 2 längs der Trommel 14. Dies ist in der rechten Bildhälfte der Fig. 22 dargestellt. Rechts oben zeigt die Fig. 22 eine perspektivische vereinfachte Darstellung der Trommel bzw. des Ringauftragssystems.

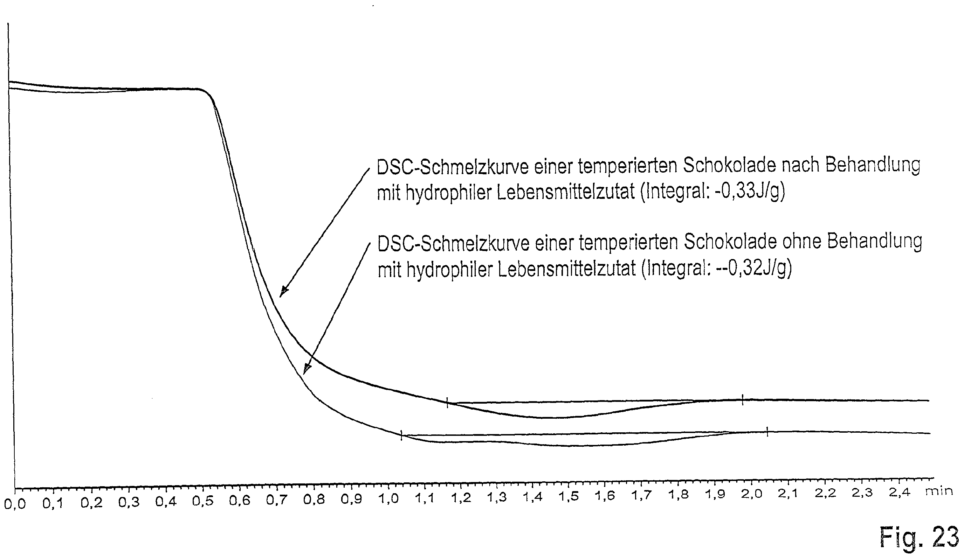

Die Fig. 23 zeigt eine grafische Darstellung einer DSC-Untersuchung temperierter Schokolade mit (S1.1) und ohne Zugabe von Wasser (S1.0). Dabei zeigen sich kaum Veränderungen in der Schmelze. Dies dient als Nachweis dafür, dass die erfindungsgemäße Schokolade vor und nach der Behandlung kristallisiertes Fett aufweist. Es besteht kein großer Unterschied in der benötigten Wärme, um das kristallisierte Fett aufzuschmelzen. Es ergeben sich somit sehr ähnliche, fast gleiche Wärmewerte. Dies zeigt, dass der Anteil an kristallisiertem Fett in beiden Schokoladen im Wesentlichen gleich ist.

Die Fig. 24 zeigt einen Boxplot, der den Einfluss des Gehalts an hydrophiler Lebensmittelzutat in Form von Wasser auf die Textur von Schokolade darstellt. Die Fig. 24 zeigt, dass die Zugabe von Wasser bis 2,5 % keine signifikante Beeinflussung auf die Textur der kristallisierten Schokolade hat.

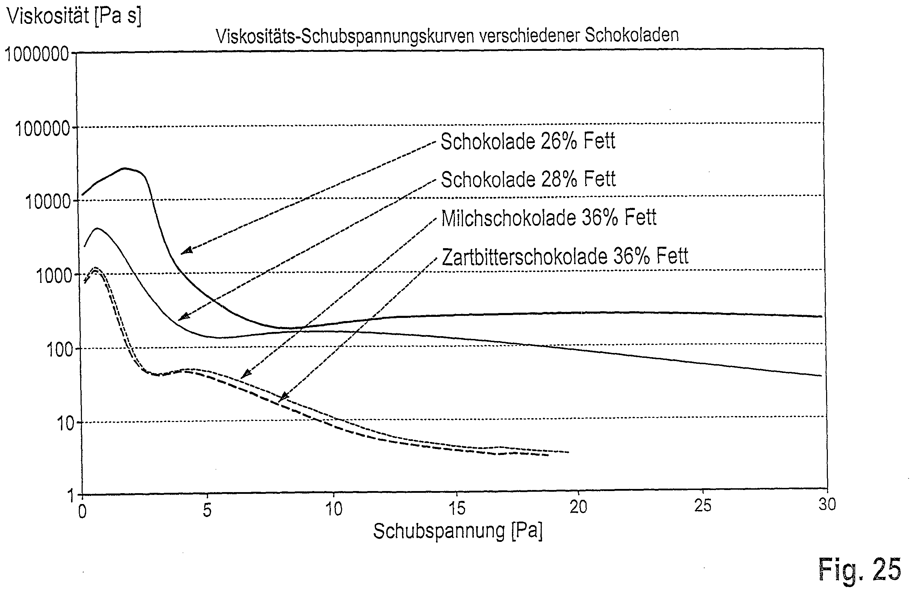

Die Fig. 25 zeigt Viskositäts-Spannungs-Kurven verschiedener Schokoladen gemessen mit KINEXUS-Viskosimeter (Messbedingungen: Platte-Platte-System, ø 50 mm, Abstand 1 mm, 40°C, Schubspannung linear ansteigend von 0 auf 50 Pa in 100 s). Die obere Kurve wurde bei einer Schokolade mit einem Fettgehalt von 26 %, die zweite Kurve von oben bei einem Fettgehalt von 28 % gemessen. Die beiden unteren Kurven beziehen sich jeweils auf einen Fettgehalt von ca. 36 %.

### Bezugszeichenliste

- 1: oberes Gebäckteil / Backprodukt
- 2: unteres Gebäckteil / Backprodukt
- 3: Füllmasse/Zwischenschicht
- 4: Ausnehmung
- 5: Düse
- 6: Schieber
- 7: Pumpe
- 8: Düse
- 9: Schieber
- 10: Pumpe
- 11: Transportvorrichtung
- 12: Backproduktestapel
- 13: Ausnehmung
- 14: Trommel
- 15: Trichter/Düse

## Patentansprüche

1. Dauerbackware mit einem oberen flachen plattenartigen Backprodukt (1), mit einem unteren flachen plattenartigen Backprodukt (2) sowie mit zumindest einer flachen Zwischenschicht (3), welche aus einer Schokoladenmasse gefertigt ist, **dadurch gekennzeichnet, dass** die Zwischenschicht (3) eine hydrophile Lebensmittelzutat aufweist, wobei die hydrophile Lebensmittelzutat Propylenglycol ist oder enthält oder die hydrophile Lebensmittelzutat eine Mischung aus Wasser und Propylenglycol ist oder enthält, wobei der Gehalt an hydrophiler Lebensmittelzutat minimal 0,01 Massen-% und maximal 0,3 Massen-% beträgt.

2. Dauerbackware nach Anspruch 1, **dadurch gekennzeichnet, dass** der Gehalt an hydrophiler Lebensmittelzutat 0,1 Massen-% bis 0,3 Massen-% beträgt.

3. Dauerbackware nach einem der Ansprüche 1 bis 2, **dadurch gekennzeichnet, dass** die Dicke der Zwischenschicht 2,5 mm bis 15 mm beträgt.

4. Verfahren zur Herstellung einer sandwichartigen Dauerbackware mit einem oberen flachen, plattenartigen Backprodukt (1), mit einem unteren flachen, plattenartigen Backprodukt (2), sowie mit zumindest einer flachen Zwischenschicht (3), insbesondere nach einem der Ansprüche 1 oder 2, mit folgenden Arbeitsschritten:
- Bereitstellen des unteren Backprodukts (2),
- Aufbringen einer halbfesten, pastösen, formstabilen, nicht belüfteten Zwischenschicht (3) mit einer über der aus dem Eigengewicht des Produktes ermittelten kritischen Schubspannung liegenden Fließgrenze, wobei die Zwischenschicht (3) aus einer Schokoladenmasse gefertigt ist und wobei die Zwischenschicht (3) eine hydrophile Lebensmittelzutat aufweist, wobei die hydrophile Lebensmittelzutat Propylenglycol ist oder enthält oder die hydrophile Lebensmittelzutat eine Mischung aus Wasser und Propylenglycol ist oder enthält , wobei der Gehalt an hydrophiler Lebensmittelzutat minimal 0,01 Massen-% und maximal 0,3 Massen-% beträgt, und
- Aufbringen des oberen Backprodukts (1).

5. Verfahren nach Anspruch 4, **dadurch gekennzeichnet, dass** die Zwischenschicht (3) durch Temperieren der Schokoladenmasse und Einbringen der hydrophilen Lebensmittelzutat vorbereitet wird.

6. Verfahren nach einem der Ansprüche 4 bis 5, **dadurch gekennzeichnet, dass** das Einbringen der hydrophilen Lebensmittelzutat so erfolgt, dass diese feindispers verteilt wird.

7. Verfahren nach Anspruch 6, **dadurch gekennzeichnet, dass** das feindisperse Verteilen der hydrophilen Lebensmittelzutat zusätzlich im Vakuum und/oder ohne Anwesenheit von Gasen durchgeführt wird.

8. Verfahren nach einem der Ansprüche 4 bis 6, **dadurch gekennzeichnet, dass** die Zwischenschicht (3) durch eine formgebende Düse (5) auf das untere Backprodukt (2) aufgebracht wird.

9. Verfahren nach Anspruch 8, **dadurch gekennzeichnet, dass** die Zwischenschicht (3) vertikal zugeführt und mittels der Düse (5) auf das untere Backprodukt (2) aufgebracht wird.

10. Verfahren nach Anspruch 8 oder 9, **dadurch gekennzeichnet, dass** mittels der Düse (5) eine formgenaue Ausbringung eines Strangs des Materials auf das Zwischenprodukt (3) erfolgt.

11. Verfahren nach einem der Ansprüche 4 bis 10, **dadurch gekennzeichnet, dass** mehrere Zwischenschichten (3) in horizontaler gegenseitiger Lage oder nebeneinander oder strukturiert ineinander aufgebracht werden.

12. Verfahren nach einem der Ansprüche 4 bis 10, **dadurch gekennzeichnet, dass** die Portionierung und Vorformung der Schokoladenmasse in den Kavitäten einer umlaufenden Trommel erfolgt.

13. Verfahren nach Anspruch 12, **dadurch gekennzeichnet, dass** sich die Schokoladenmasse durch das Eigengewicht aus der Kavität auf das zugeführte Gebäckstück herauslöst.

14. Verfahren nach Anspruch 13, **dadurch gekennzeichnet, dass** die Trommel beheizt wird.

15. Verfahren nach Anspruch 12, **dadurch gekennzeichnet, dass** die Schokoladenmasse durch einen Stempel aus der Kavität auf das zugeführte Gebäckstück aufgebracht wird.

16. Verfahren nach Anspruch 15, **dadurch gekennzeichnet, dass** die Schokoladenmasse vom Stempel durch einen (beheizten) Draht, Messer oder Abstreifer getrennt wird.

17. Verfahren nach einem der Ansprüche 4 bis 16, **dadurch gekennzeichnet, dass** das obere Backprodukt (1) nach dem Aufbringen der Zwischenschicht angedrückt wird.

18. Verfahren nach einem der Ansprüche 4 bis 16, **dadurch gekennzeichnet, dass** die Backprodukte zeitgleich mit der vorgeformten Schokoladenmasse durch seitliches oder vertikales Andrücken verbunden werden.

19. Verfahren nach Anspruch 18, **dadurch gekennzeichnet, dass** die Portionierung durch das Trennen des Füllungsstranges vor dem Verbinden der Schokoladenmasse mit den Gebäckstücken erfolgt.

20. Verfahren nach Anspruch 18, **dadurch gekennzeichnet, dass** die Portionierung durch das Trennen des Füllungsstranges nach dem Verbinden der Schokoladenmasse mit den Gebäckstücken erfolgt.

## Claims

1. A baked confectionery good comprising an upper planar plate-like baked product (1), comprising a lower planar plate-like baked product (2) and comprising at least one planar intermediate layer (3), which is made of a chocolate mass, **characterised in that** the intermediate layer (3) comprises a hydrophilic food additive, wherein the hydrophilic food additive is or contains propylene glycol or the hydrophilic food additive is or contains a mixture of water and propylene glycol, wherein the hydrophilic food additive content is minimum 0.01% by mass and maximum 0.3% by mass.

2. The baked confectionery good according to claim 1, **characterised in that** the hydrophilic food additive content is 0.1 % by mass to 0.3 % by mass.

3. The baked confectionery good according to any one of claims 1 to 2, **characterised in that** the thickness of the intermediate layer is 2.5 mm to 15 mm.

4. A method for manufacturing a sandwich-like baked confectionery good comprising an upper planar, plate-like baked product (1), comprising a lower planar, plate-like baked product (2), and comprising at least one planar intermediate layer (3), in particular according to claim 1 or 2, comprising the following working steps:
- providing the lower baked product (2),
- applying a semi-solid, paste-like, dimensionally stable, non-aerated intermediate layer (3), having a flow limit above the critical shear stress determined from the inherent weight of the product, the intermediate layer (3) being made of a chocolate mass and the intermediate layer (3) comprising a hydrophilic food additive, wherein the hydrophilic food additive is or contains propylene glycol or the hydrophilic food additive is or contains a mixture of water and propylene glycol, wherein the hydrophilic food additive content is minimum 0.01% by mass and maximum 0.3% by mass, and
- applying the upper baked product (1).

5. The method according to claim 4, **characterised in that** the intermediate layer (3) is prepared by tempering the chocolate mass and introducing the hydrophilic food additive.

6. The method according to any one of claims 4 to 5, **characterised in that** the hydrophilic food additive is introduced in such a way that it is finely dispersely distributed.

7. The method according to claim 6, **characterised in that** the finely disperse distribution of the hydrophilic food additive is additionally carried out in a vacuum and/or without the presence of gases.

8. The method according to any one of claims 4 to 6, **characterised in that** the intermediate layer (3) is applied to the lower baked product (2) by way of a shaping nozzle (5).

9. The method according to claim 8, **characterised in that** the intermediate layer (3) is supplied vertically and applied to the lower baked product (2) by way of the nozzle (5).

10. The method according to claim 8 or 9, **characterised in that** a strand of the material is applied to the intermediate product (3) precisely in terms of shape by way of the nozzle (5).

11. The method according to any one of claims 4 to 10, **characterised in that** a plurality of intermediate layers (3) are applied in a horizontal opposed position or side by side or structured inside one another.

12. The method according to any one of claims 4 to 10, **characterised in that** the chocolate mass is positioned and shaped in the cavities of a rotating drum.

13. The method according to claim 12, **characterised in that** the chocolate mass is released from the cavity onto the supplied baked good piece under the inherent weight thereof.

14. The method according to claim 13, **characterised in that** the drum is heated.

15. The method according to claim 12, **characterised in that** the chocolate mass is applied from the cavity to the supplied baked good piece by way of a stamp.

16. The method according to claim 15, **characterised in that** the chocolate mass is separated from the stamp by way of a (heated) wire, blade or scraper.

17. The method according to any one of claims 4 to 16, **characterised in that** the upper baked product (1) is pressed on after the application of the intermediate layer.

18. The method according to any one of claims 4 to 16, **characterised in that** the baked products are connected to the pre-shaped chocolate mass simultaneously by pressing on laterally or vertically.

19. The method according to claim 18, **characterised in that** the portioning takes place by way of separation of the filling strand before the chocolate mass is connected to the baked good pieces.

20. The method according to claim 18, **characterised in that** the portioning takes place by way of separation of the filling strand after the chocolate mass is connected to the baked good pieces.

## Revendications

1. Produits de biscuiterie longue conservation comprenant un produit de biscuiterie supérieur en forme de plaque (1), un produit de biscuiterie inférieur en forme de plaque (2) et au moins une couche intermédiaire plate (3), laquelle est constituée d'une pâte au chocolat, **caractérisés en ce que** la couche intermédiaire (3) comprend un ingrédient alimentaire hydrophile, lequel ingrédient alimentaire hydrophile est ou contient du propylène glycol ou l'ingrédient alimentaire hydrophile est ou contient un mélange d'eau et de propylène glycol, dans lequel la teneur en ingrédient alimentaire hydrophile est au minimum de 0,01 % de la pâte et au maximum de 0,3 % de la pâte.

2. Produits de biscuiterie longue conservation selon la revendication 1, **caractérisés en ce que** la teneur en ingrédient alimentaire hydrophile est de 0,1 % de la pâte à 0,3 % de la pâte.

3. Produits de biscuiterie longue conservation selon l'une des revendications 1 à 2, **caractérisés en ce que** l'épaisseur de la couche intermédiaire est de 2,5 mm à 15 mm.

4. Procédé de production d'un produit de biscuiterie longue conservation de type sandwich avec un produit de biscuiterie supérieur en forme de plaque (1), avec un produit de biscuiterie inférieur en forme de plaque (2) et avec au moins une couche intermédiaire plate (3), notamment selon l'une des revendications 1 ou 2, avec les étapes de travail suivantes :
- Mise en place du produit de biscuiterie inférieur (2),
- Application d'une couche intermédiaire (3) semi-solide, pâteuse, indéformable, non aérée avec une limite d'élasticité supérieure à la contrainte de cisaillement critique déterminée à partir du poids propre du produit, laquelle couche intermédiaire (3) est constituée d'une pâte au chocolat et laquelle couche intermédiaire (3) a un ingrédient alimentaire hydrophile, lequel ingrédient alimentaire hydrophile est ou contient du propylène glycol ou l'ingrédient alimentaire hydrophile est ou contient un mélange d'eau et de propylène glycol, dans lequel la teneur en ingrédient alimentaire hydrophile est au minimum de 0,01 % de la pâte et au maximum de 0,3 % de la pâte, et
- Application du produit de biscuiterie supérieur (1).

5. Procédé selon la revendication 4, **caractérisé en ce que** la couche intermédiaire (3) est préparée en tempérant la pâte au chocolat et en introduisant l'ingrédient alimentaire hydrophile.

6. Procédé selon l'une quelconque des revendications 4 à 5, **caractérisé en ce que** l'introduction de l'ingrédient alimentaire hydrophile s'effectue de manière à ce que celui-ci soit finement dispersé.

7. Procédé selon la revendication 6, **caractérisé en ce que** la dispersion fine de l'ingrédient alimentaire hydrophile est en outre réalisée sous vide et/ou sans présence de gaz.

8. Procédé selon l'une quelconque des revendications 4 à 6, **caractérisé en ce que** la couche intermédiaire (3) est appliquée sur le produit de biscuiterie inférieur (2) à travers une buse de mise en forme (5).

9. Procédé selon la revendication 8, **caractérisé en ce que** la couche intermédiaire (3) est amenée verticalement et appliquée sur le produit inférieur (2) au moyen de la buse (5).

10. Procédé selon la revendication 8 ou 9, **caractérisé en ce qu'**au moyen de la buse (5) un épandage de la forme précise d'un cordon de matière sur le produit intermédiaire (3) est réalisé.

11. Procédé selon l'une des revendications 4 à 10, **caractérisé en ce que** plusieurs couches intermédiaires (3) sont appliquées ensemble en position horizontale ou côte à côte ou de manière structurée les unes dans les autres.

12. Procédé selon l'une quelconque des revendications 4 à 10, **caractérisé en ce que** le portionnement et le préformage de la pâte au chocolat s'effectuent dans les cavités d'un tambour rotatif.

13. Procédé selon la revendication 12, **caractérisé en ce que** la pâte au chocolat se détache de la cavité sur le produit de biscuiterie mis en place par son propre poids.

14. Procédé selon la revendication 13, **caractérisé en ce que** le tambour est chauffé.

15. Procédé selon la revendication 12, **caractérisé en ce que** la pâte au chocolat est appliquée par un tampon depuis la cavité sur le produit de biscuiterie mis en place.

16. Procédé selon la revendication 15, **caractérisé en ce que** la pâte au chocolat est séparée du tampon par un fil (chauffé), un couteau ou un grattoir.

17. Procédé selon l'une quelconque des revendications 4 à 16, **caractérisé en ce que** le produit de biscuiterie supérieur (1) est imprimé après l'application de la couche intermédiaire.

18. Procédé selon l'une quelconque des revendications 4 à 16, **caractérisé en ce que** les produits de biscuiterie sont reliés simultanément à la pâte au chocolat préformée par pression latérale ou verticale.

19. Procédé selon la revendication 18, **caractérisé en ce que** le portionnement est effectué par la séparation du cordon de remplissage avant de relier la pâte au chocolat aux produits de biscuiterie.

20. Procédé selon la revendication 18, **caractérisé en ce que** le portionnement est effectué par la séparation du cordon de remplissage après avoir relié la pâte au chocolat aux produits de biscuiterie.
